# EUROPEAN PATENT SPECIFICATION

(11) **EP 3 007 416 B1**
(45) Date of publication and mention of the grant of the patent: **25.03.2020**
(21) Application number: 15189135.5
(22) Date of filing: 09.10.2015
(51) Int. Cl.: H04M 1/60, H04M 1/725, H04W 84/18, H04W 4/80, H04W 76/14

(54) **MULTI-CONNECTION METHOD AND ELECTRONIC DEVICE SUPPORTING THE SAME**
MEHRFACHVERBINDUNGSVERFAHREN UND ELEKTRONISCHE VORRICHTUNG ZUR UNTERSTÜTZUNG DAVON
PROCÉDÉ DE MULTICONNEXION ET DISPOSITIF ÉLECTRONIQUE POUR SUPPORTER CELUI-CI

(30) Priority: 10.10.2014 KR 20140136650
(43) Date of publication of application: 13.04.2016
(73) Proprietor: Samsung Electronics Co., Ltd., Gyeonggi-do 16677 (KR)
(72) Inventor: BAEK, In Ho, 16693 Gyeonggi-do (KR); PARK, Sung Kyu, 16527 Gyeonggi-do (KR); SHIM, In Seok, 16951 Gyeonggi-do (KR)
(74) Representative: Land, Addick Adrianus Gosling

(56) References cited:
- EP-A2- 2 555 490
- DE-A1-102009 026 265
- US-A1- 2011 034 127

## Description

The present invention relates to a multi-connection of electronic devices.

Electronic devices such as smartphones generally provide a communication connection function using a communication module.

The electronic device is required to release a current connection in order to perform a connection procedure with another disconnected electronic device while being connected to another electronic device. Accordingly, the electronic device must frequently perform a connection release or new connection, which is an inconvenience to the user.

Bluetooth® communication links allow a first device to be connected to two other devices. Disadvantageously, in order to connect the two other devices to each other, a user has to release the connection between the first device and the other devices manually and then manually connect the two other devices to each other.

Patent document US 2011/0034127 A1 discloses setting up a direct wireless fidelity (Wi-Fi) link between two client stations, both connected to a group owner in a peer to peer wireless network, using the tunneled direct link setup (TDLS) protocol. In order to setup a direct wireless link, the group owner transmits and receives connection information regarding the first and second client stations in the form of setup requests, responses and confirmations to the first and second client stations. The present application is not related to Wi-Fi.

The present invention has been made to address the above-mentioned problems and disadvantages, and to provide at least the advantages described below.

Accordingly, an aspect of the present invention is to provide a multi-connection support method according to claim 1.

Embodiments according to the present invention provide a multi-connection method of having a multi-connection state such as a network formation between electronic devices automatically or with a simple manipulation by checking device information of at least one electronic device among electronic devices in a connection state and an electronic device for a new connection and an electronic device supporting the same.

In accordance with an aspect of the present invention, an electronic device according to claim 3 is provided, and includes a communication interface configured to establish a communication channel with at least one another electronic device, and a processor configured to control a communication connection establishment with the at least one another electronic device through the communication interface, wherein when a specified electronic device is connected to the electronic device, the processor transmits additional connection information to establish connection with the at least one another electronic device to the specified electronic device while the at least one another electronic device is connected with the electronic device.

### BRIEF DESCRIPTION OF THE DRAWINGS

The above and other aspects, features, and advantages of the present invention will be more apparent from the following detailed description in conjunction with the accompanying drawings, in which:
FIG. 1 illustrates an electronic device in a network environment according to various embodiments of the present invention;
FIG. 2 illustrates a signal flow of electronic devices relating to multi-connection according to various embodiments of the present invention;
FIG. 3 illustrates a configuration of a first electronic device and a first electronic device-related network environment according to various embodiments of the present invention;
FIG. 4 illustrates a connection control module according to various embodiments of the present invention;
FIG. 5 illustrates a multi-connection- related first electronic device management method according to various embodiments of the present invention;
FIG. 6 illustrates a second electronic device according to various embodiments of the present invention;
FIG. 7 illustrates a multi-connection- related second electronic device management method according to various embodiments of the present invention;
FIG. 8 illustrates a third electronic device according to various embodiments of the present invention;
FIG. 9 illustrates a multi-connection- related third electronic device management method according to various embodiments of the present invention;
FIG. 10 illustrates a multi-connection method according to various embodiments of the present invention;
FIG. 11 illustrates a multi-connection method using a connection list according to various embodiments of the present invention;
FIG. 12 illustrates a multi-connection method depending on a new connection request according to various embodiments of the present invention;
FIG. 13 illustrates a multi-connection setting-related screen according to various embodiments of the present invention;
FIG. 14 illustrates an electronic device management relating to multi-connection setting change according to various embodiments of the present invention;
FIG. 15 is a block diagram illustrating an electronic device according to various embodiments of the present invention;
FIG. 16 is a block diagram illustrating a program module according to various embodiments of the present invention; and
FIG. 17 illustrates a multi-connection management according to various embodiments of the present invention.

### DETAILED DESCRIPTION OF EMBODIMENTS OF THE PRESENT INVENTION

Embodiments of the present invention are disclosed herein with reference to the accompanying drawings. However, the embodiments of the present invention are not limited to a specific embodiment and it should be understood that the present invention covers all the modifications, equivalents, and/or alternatives of this disclosure provided if they come within the scope of the appended claims and their equivalents. With respect to the descriptions of the drawings, like reference numerals refer to like elements. In describing the present invention, well-known functions or constructions are not described in detail for the sake of clarity and conciseness.

The terms "include," "comprise," and "have", or "may include," or "may comprise" and "have" used herein indicate disclosed functions, operations, or existence of elements but do not exclude other functions, operations or elements.

For instance, the expression "A or B", or "at least one of A or/and B" may indicate including A, B, or both A and B. For instance, the expression "A or B", or "at least one of A or/and B" may indicate (1) at least one A, (2) at least one B, or (3) both at least one A and at least one B.

The terms such as "1st", "2nd", "first", "second", and the like used herein may refer to modifying various different elements of various embodiments of the present invention, but do not limit the elements. For instance, "a first user device" and "a second user device" may indicate different users regardless of the order or the importance. For example, a first component may be referred to as a second component and vice versa without departing from the scope of the present invention.

In various embodiments of the present invention, it will be understood that when a component (for example, a first component) is referred to as being "(operatively or communicatively) coupled with/to" or "connected to" another component (for example, a second component), the component can be directly connected to the other component or connected through another component (for example, a third component). It will be further understood that when a first component is referred to as being "directly connected to" or "directly access" a second component, a third component does not exist between the first component and the second component.

The expression "configured to" used in various embodiments of the present invention may be interchangeably used with "suitable for", "having the capacity to", "designed to", "adapted to", "made to", or "capable of" according to a situation, for example. The term "configured to" may not necessarily indicate "specifically designed to" in terms of hardware. Instead, the expression "a device configured to" in some situations may indicate that the device and another device or part are "capable of'. For example, "a processor configured to perform A, B, and C" in a phrase may indicate a dedicated or embedded processor for performing a corresponding operation or a generic-purpose processor such as a central processing unit (CPU) or application processor for performing corresponding operations by executing at least one software program stored in a memory device.

Terms used in various embodiments of the present invention are used to describe specific embodiments of the present invention, and are not intended to limit the scope of other embodiments. The terms of a singular form may include plural forms unless they have a clearly different meaning in the context. Otherwise indicated herein, all the terms used herein, which include technical or scientific terms, have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning. Even the terms defined in this specification cannot be interpreted as excluding embodiments of the present invention.

According to various embodiments of the present invention, electronic devices may include at least one of smartphones, tablet personal computers (PCs), mobile phones, video phones, electronic book (e-book) readers, desktop personal computers (PCs), laptop personal computers (PCs), netbook computers, workstation server, personal digital assistants (PDAs), portable multimedia player (PMPs), MP3 players, mobile medical devices, cameras, and wearable devices such as smart glasses, head-mounted-devices (HMDs), electronic apparel, electronic bracelets, electronic necklaces, electronic appcessories, electronic tattoos, smart mirrors, and smart watches.

According to some embodiments of the present invention, an electronic device may be at least one smart home appliance including televisions, digital video disk (DVD) players, audios, refrigerators, air conditioners, cleaners, ovens, microwave ovens, washing machines, air cleaners, set-top boxes, home automation control panels, security control panels, TV boxes such as Samsung HomeSync™, Apple TV™ or Google TV™, game consoles such as Xbox™ and PlayStation™, electronic dictionaries, electronic keys, camcorders, and electronic picture frames.

According to some embodiments of the present invention, an electronic device may include at least one of various medical devices supporting call forwarding service such as glucometers, heart rate meters, blood pressure meters, temperature meters, magnetic resonance angiography (MRA) devices, magnetic resonance imaging (MRI) devices, computed tomography (CT) devices, medical imaging devices, and ultrasonic devices, navigation devices, global positioning system (GPS) receivers, event data recorders (EDRs), flight data recorders (FDRs), vehicle infotainment devices, marine electronic equipment such as marine navigation systems and gyro compasses, avionics, security equipment, vehicle head units, industrial or household robots, financial institutions' automatic teller's machines (ATMs), stores' point of sales (POS) devices or Internet of Things (IoT) such as bulbs, various sensors, electric or gas meters, sprinkler systems, fire alarms, thermostats, street lights, toasters, exercise equipment, hot water tanks, heaters, and boilers.

In various embodiments of the present invention, an electronic device may include at least one of part of furniture or buildings/structures supporting call forwarding service, electronic boards, electronic signature receiving devices, projectors, and various measuring instruments such as those for water, electricity, gas, or radio signals. An electronic device according to various embodiments of the present invention may be one of the above-mentioned various devices or a combination thereof, and may be a flexible electronic device. An electronic device according to an embodiment of the present invention is not limited to the above-mentioned devices and may include a new type of an electronic device according to the development of technology.

Hereinafter, an electronic device according to various embodiments of the present invention will be described in more detail with reference to the accompanying drawings. The term "user" in this disclosure may refer to a person using an electronic device or a device using an electronic device, such as an artificial intelligence electronic device.

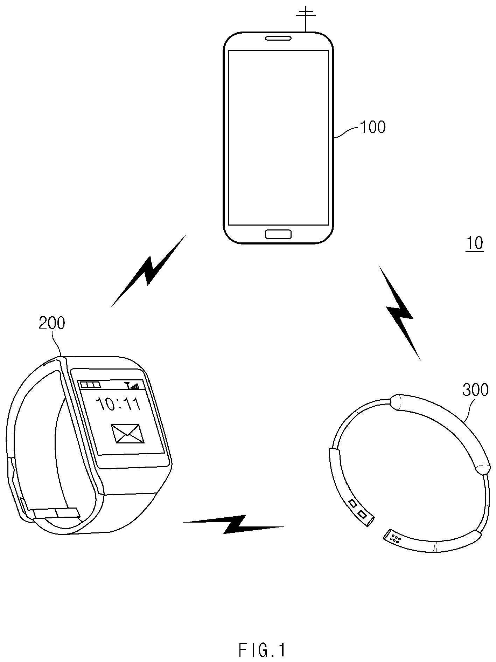

FIG. 1 illustrates electronic devices in a network environment according to various embodiments of the present invention.

Referring to FIG. 1, a network environment 10 includes a first electronic device 100, a second electronic device 200, and a third electronic device 300, which may be connected automatically according to a setting. According to an embodiment of the present invention, the third electronic device 300 establishing a communication channel (described herein as a short-range wireless communication channel, a wireless communication channel, a Bluetooth® communication channel, a communication channel, and a connection) with the first electronic device establishes a communication channel with the second electronic device 200 automatically based on the device information of the second electronic device 200 provided from the first electronic device 100. During this operation, the third electronic device 300 establishes a multi-connection with the first electronic device 100 and the second electronic device 200. Based on the multi-connection, the third electronic device 300 selectively or simultaneously receives information relating to a user function execution of the first electronic device 100 and information relating to a user function execution of the second electronic device 200, and outputs the information.

The first electronic device 100 establishes a communication channel (for example, a Bluetooth® wireless communication channel) with the second electronic device 200 and the third electronic device 300. Accordingly, the first electronic device 100 may include a communication module for establishing a communication channel with the second electronic device 200 and a communication module for establishing a communication channel with the third electronic device 300. According to another embodiment, the first electronic device 100 includes a mobile communication module and receives user information such as call connection or text message from an external electronic device. The first electronic device 100 transmits the received user information to the third electronic device 300. According to an embodiment of the present invention, the first electronic device 100 establishes a communication channel with the second electronic device 200 based on Bluetooth® low energy (BLE) technology. While the third electronic device 300 enters a pairing mode (or pairing function), the first electronic device 100 searches for the third electronic device 300 periodically to establish a Bluetooth® communication channel. The first electronic device 100 has a multi-connection state with the second electronic device 200 and the third electronic device 300. According to an embodiment of the present invention, the first electronic device 100 may be a smartphone or a pad capable of providing a screen interface relating to user function processing in a specified size.

The second electronic device 200, for example, establishes a communication channel with the first electronic device 100 and the third electronic device 300Accordingly, using a communication module included in the second electronic device 200. According to various embodiments of the present invention, the second electronic device 200 may include a mobile communication module and receives user information such as call connection or text message from an external electronic device. The second electronic device 200 provides device information to the first electronic device 100 while connected to the first electronic device 100 and not connected to the third electronic device 300provides. The second electronic device 200 establishes a communication channel with the third electronic device 300 corresponding to a request of the first electronic device 100. According to an embodiment of the present invention, the second electronic device 200 establishes a communication channel with the first electronic device 100 based on BLE technology. While the third electronic device 300 enters a pairing mode, the second electronic device 200 searches for the third electronic device 300 to establish a Bluetooth® communication channel. Accordingly, the second electronic device 200 has a multi-connection with the first electronic device 100 and the third electronic device 300. The second electronic device 200 also has a limited display area in comparison to the first electronic device 100. For example, the second electronic device 200 may be a smart electronic watch, an electronic bracelet, and electronic glasses.

The third electronic device 300 establishes a communication channel with the first electronic device 100 and the second electronic device 200, using a communication module included in the third electronic device 300. The third electronic device 300 receives device information of the second electronic device 200 from the first electronic device 100 while connected to the first electronic device 100. The third electronic device 300 establishes a communication channel with the second electronic device 200 based on the received device information of the second electronic device 200. During this operation, if the second electronic device 200 has a history of forming a communication channel, the third electronic device 300 establishes a multi-connection. If the second electronic device 200 does not have a history of forming a communication channel, the third electronic device 300 enters a paring mode and establishes a communication channel corresponding to a connection request of the second electronic device 200. The third electronic device 300 may not have a display function or may have a relatively limited display area in comparison to the second electronic device 200. For example, the third electronic device 300 may be worn on a user's upper arm, ear, neck, or head, in the form of earphones, headsets, hearing aids, headbands, glasses-type electronic devices, pinned electronic devices, neck circles, or arm circles, for example.

While connected to the first electronic device 100, the third electronic device 300 establishes a multi-connection with the second electronic device 200, but various embodiments of the present invention are not limited thereto. For example, the first electronic device 100 may perform a multi-connection with the second electronic device 200 and the third electronic device 300 according to a setting. According to another embodiment, the second electronic device 200 may perform a multi-connection with the first electronic device 100 and the third electronic device 300 according to a setting.

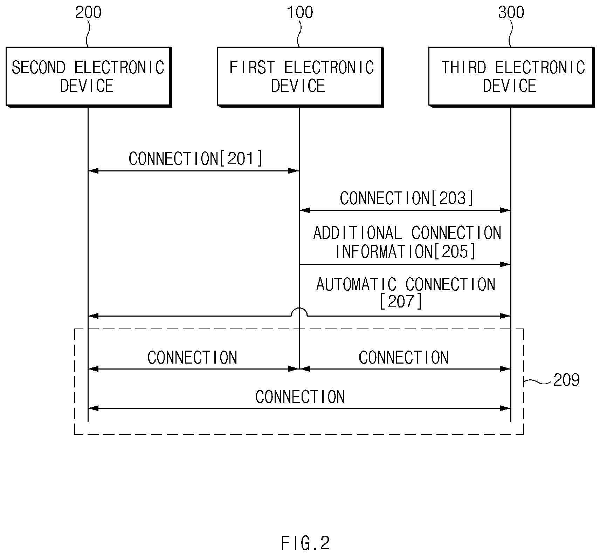

FIG. 2 illustrates a signal flow of electronic devices relating to multi-connection according to various embodiments of the present invention.

Referring to FIG. 2, according to various embodiments of the present invention, the first electronic device 100 and the second electronic device 200 have a connection state in step 201. For example, the first electronic device 100 and the second electronic device 200 establish a short-range communication channel based on a Bluetooth® communication module. According to various embodiments of the present invention, the first electronic device 100 and the second electronic device 200 perform a scan operation based on BLE. When the first electronic device 100 and the second electronic device 200 are disposed within a predetermined distance, a Bluetooth® communication channel is established between these devices.

In step 203, the third electronic device 300 and the first electronic device 100 are connected. According to an embodiment of the present invention, the third electronic device 300 enters a pairing mode according to a user input. At this point, the third electronic device 300 enters within a predetermined distance for establishing a short-range wireless communication channel with the first electronic device 100. According to another embodiment, while entering a paring mode, the third electronic device 300 relocates to a location within a specified distance of the first electronic device 100. The first electronic device 100 establishes a communication channel by scanning surroundings in a specified period as a communication module is activated. According to an embodiment, when the third electronic device 300 entering a pairing mode is disposed within a specified distance, the first electronic device 100 establishes a wireless communication channel with the third electronic device 300.

In step 205, the first electronic device 100 delivers additional connection information to the third electronic device 300. For example, the first electronic device 100 delivers Bluetooth® device address information or the Bluetooth® device address of the second electronic device 200 having a connection state in step 201 as additional connection information to the third electronic device 300.

In step 207, the third electronic device 300 automatically connects with the second electronic device 200 based on additional connection information. For example, if the second electronic device 200 has a previous connection history, while the third electronic device 300 is maintaining a connection with the third electronic device 300, the third electronic device 300 transmits/receives signals for device connection to/from the second electronic device 200 to add the connection of the second electronic device 200. If the second electronic device 200 has no previous connection history, the third electronic device 300 establishes a communication channel with the second electronic device 200 by performing a paring operation.

Based on the connection addition operation in step 207, the first electronic device 100, the second electronic device 200, and the third electronic device 300 have a multi-connection state in step 209. If the second electronic device 200 and the third electronic device 300 have no previous connection history, the third electronic device 300 releases a connection with the first electronic device 100 in order to enter a paring mode. After establishing a communication channel by performing an automatic pairing with the second electronic device 200, the third electronic device 300 automatically adds a connection of the first electronic device 100.

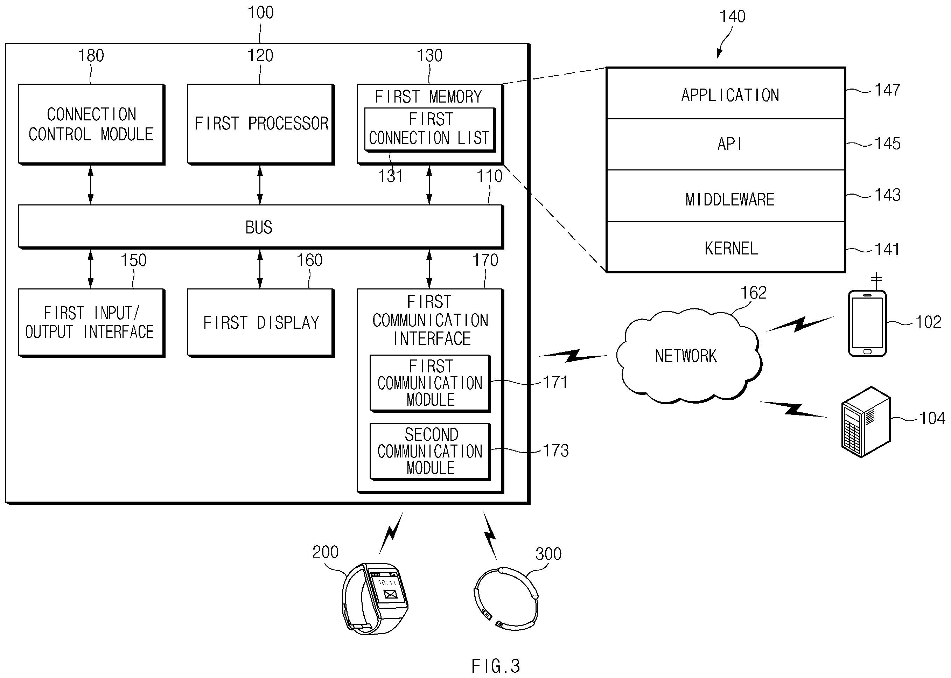

FIG. 3 illustrates a configuration of a first electronic device and a first electronic device-related network environment according to various embodiments of the present invention.

Referring to FIG. 3, a first electronic device 100 includes a first bus 110, a first processor 120, a first memory 130, a first input/output interface 150, a first display 160, a connection control module 180, and a first communication interface 170. According to an embodiment of the present invention, the first electronic device 100 may omit at least one of the components or may additionally include a different component.

The first bus 110, for example, includes a circuit for connecting the components 120 to 180 to each other and delivering a communication such as control message and/or data between the components 120 to 180. According to an embodiment of the present invention, the first bus 110 performs information delivery between the connection control module 180 and the first communication interface 170, such as transmission/reception of information necessary for communication channel establishment with the second electronic device 200 and with the third electronic device 300 between the connection control module 180 and the first communication interface 170.

The first processor 120 includes at least one of a central processing unit (CPU), an Application Processor (AP), and a communication processor (CP). The first processor 120, for example, executes calculation or data processing for control and/or communication of at least one another component of the first electronic device 100. According to an embodiment of the present invention, the first processor 120 performs delivery and processing of signals necessary for communication channel establishment with the second electronic device 200 corresponding to an operation of the connection control module 180. By controlling the first communication interface 170 corresponding to an operation of the connection control module 180, the first processor 120 performs delivery and processing of signals necessary for communication channel establishment with the third electronic device 300. According to various embodiments of the present invention, the first processor 120 controls delivery and processing of signals necessary for a multi-connection establishment between the third electronic device 300 and the second electronic device 200 corresponding to an operation of the connection control module 180. According to various embodiments of the present invention, the first processor 120 includes at least part of the connection control module 180. According to another embodiment, at least one first processor 120 configures the connection control module 180.

The first memory 130 may include a volatile and/or nonvolatile memory. The first memory 130 stores instructions or data relating to at least one another component of the first electronic device 100. For example, the first memory 130 stores instructions or data necessary for communication channel establishment with the second electronic device 200 or the third electronic device 300. The first memory 130 stores a first connection list 131 (or paired list). The first connection list 131 may have a history of establishing a communication channel with the second electronic device 200 and/or the third electronic device 300. The first connection list 131 is used to perform a scan operation for determining whether there is a history of establishing a communication channel with the second electronic device 200 and/or the third electronic device 300 by searching surroundings in a specified period or in real time corresponding to a control of the connection control module 180. According to an embodiment of the present invention, the first memory 130 stores software and/or program 140. The programs 140 may include a kernel 141, a middleware 143, an application programming interface (API) 145, and/or an application program (or an application) 147. At least part of the kernel 141, the middleware 143, or the API 145 may be referred to as an operating system (OS). For example, the first processor 120 may search the second electronic device 200 or the third electronic device 300 based on the first connection list 131. In this state, if a history associated with the third electronic device 300 does not exist in the first connection list 131, the first processor 120 may not perform searching operation about the electronic device 300 or the first processor 120 may perform scanning operation.

The kernel 141 controls or manages system resources such as the first bus 110, the first processor 120, and the first memory 130, used for performing operations or functions implemented in other programs such as the middleware 143, the API 145, or the application program 147. Additionally, the kernel 141 provides an interface for controlling or managing system resources by accessing an individual component of the first electronic device 100 from the middleware 143, the API 145, or the application program 147. According to various embodiments of the present invention, the kernel 141 provides an interface for control and management of system resources necessary for establishing a communication channel with the second electronic device 200 or the third electronic device 300, and for establishing a multi-connection with the second electronic device 200 and the first electronic device 300.

The middleware 143 serves as an intermediary for exchanging data as the API 145 or the application program 147 communicates with the kernel 141. Additionally, the middleware 143 processes at least one job request received from the application program 147 according to a priority. For example, the middleware 143 assigns to at least one application program 137 a priority for using a system resource of the first electronic device 100. For example, the middleware 143 performs scheduling or load balancing on the at least one job request by processing the at least one job request according to the priority assigned to the at least one job request. According to an embodiment of the present invention, the middleware 143 performs task request processing relating to the first communication interface 170 relating to a communication channel establishment with the second electronic device 200 or the third electronic device 300. Additionally, the middleware 143 performs task request processing relating to the first communication interface 170 relating to a multi-connection with the second electronic device 200 or the third electronic device 300.

The API 145, as an interface for allowing the application program 147 to control a function provided from the kernel 141 or the middleware 143, includes at least one interface or instruction for file control, window control, image processing, or character control. According to various embodiments of the present invention, the API 145 relates to a BLE based communication channel establishment with the second electronic device 200 and an API relating to a Bluetooth® based communication channel establishment with the third electronic device 300. Additionally, the API 145 includes an API relating to a device information collection of the second electronic device 200 and an API for supporting a multi-connection with the second electronic device 200 and the third electronic device 300.

The application 147 includes an application executed based on a communication channel establishment with the second electronic device 200 and an application executed based on a communication channel establishment with the third electronic device 300. Additionally, the application 147 includes at least one application executed based on a multi-connection of the second electronic device 200 and the third electronic device 300.

The first input/output interface 150 serves as an interface for delivering instructions or data inputted from a user or another external device to another component(s) of the first electronic device 100. Additionally, the first input/output interface 150 outputs instructions or data received from another component(s) of the first electronic device 100 to a user or another external device. According to an embodiment of the present invention, the first input/output interface 150 generates an input signal for requesting a communication channel establishment with the second electronic device 200 and an input signal for requesting a communication channel establishment with the third electronic device 300. According to various embodiments of the present invention, the first input/output interface 150 generates an input signal relating to a setting of a single connection, such as establishing a one-to-one short-range wireless communication channel, or a setting of a multi-connection, such as establishing a one- to- many or many- to- may short-range wireless communication channel.

According to various embodiments of the present invention, the first input/output interface 150 includes an audio module, such as an audio guide sound relating to a single setting and an audio guide sound relating to a multi-setting. Additionally, the audio module outputs at least one of a guide sound for guiding a single connection with the second electronic device 200, a guide sound for guiding a single connection with the third electronic device 300, and a guide sound for guiding a multi-connection with the second electronic device 200 and the third electronic device 300 corresponding to a specified setting. The above-mentioned guide sound output may be omitted corresponding to a setting.

The first display 160 includes a liquid crystal display (LCD), a light emitting diode (LED) display, an organic light emitting diode (OLED) display, a microelectromechanical systems (MEMS) display, or an electronic paper display. The first display 160 displays content such as text, images, video, icons, and symbols, to a user. The first display 160 may include a touch screen that receives a touch, gesture, proximity, or hovering input by using an electronic pen or a user's body part.

According to various embodiments of the present invention, the first display 160 outputs a screen interface relating to a single connection or a multi-connection setting and a screen interface relating to a single connection state or a multi-connection state. According to another embodiment, the first display 160 outputs a screen interface corresponding to a change from a single connection state to a multi-connection state or a change from a multi-connection state to a single connection.

The first communication interface 170 sets communication between the first electronic device 100 and an external device, such as the external electronic device 102, 200, or 300 or the server device 104. For example, the first communication interface 170 communicates with the external device 102 or the server device 104 in connection to the network 162 through wireless communication or wired communication. According to another embodiment, the first communication interface 170 communicates with the external electronic device 200 or 300 through wireless communication.

The wireless communication uses at least one of long term evolution (LTE), LTE-advanced (LTE-A), code division multiple access (CDMA), wideband CDMA (WCDMA), universal mobile telecommunications system (UMTS), WiBro, or global system for mobile communications (GSM) as a cellular communication protocol, for example. Additionally, the wireless communication, for example, may include a short-range communication 164, such as at least one of WiFi, Bluetooth®, near field communication (NFC), global positioning system (GPS), BLE, Near Field Magnetic Induction (NFMI), and 2.4G/4GHz Ear to Ear (E2E) wireless communication methods. The wired communication include at least one of a universal serial bus (USB), high definition multimedia interface (HDMI), recommended standard 232 (RS-232), and plain old telephone service (POTS). The network 162 includes at least one computer network, such as a local area network (LAN) or wideband area network (WAN), the Internet, and a telephone network.

The first communication interface 170 includes a first commutation module 171 relating to single connection or multi-connection processing and a second communication module 173 for supporting a cellular communication channel. According to various embodiments of the present invention, the first communication module 171 includes at least one of a Bluetooth® communication module, a BLE communication module, an E2E communication module, and an NFMI communication module. The first communication module 171, when in the form of a Bluetooth® communication module, establishes a short-range communication channel with the second electronic device 200 and the third electronic device 300. The first communication module 171 searches for the second electronic device 200 based on BLE and establishes a Bluetooth® communication channel with the found second electronic device 200. Additionally, the first communication module 171 communicates with the third electronic device 300 based on Bluetooth® corresponding to a control of the connection control module 180. The second control module 173 supports a mobile communication function of the first electronic device 100. For example, the second control module 173 receives a call connection or a message. The received call connection or message may be delivered to at least one of the second electronic device 200 and the third electronic device 300 corresponding to a control of the connection control module 180.

The external electronic device 102 may be the same or a different type of the electronic device 100. The server device 104 includes a group of one or more servers. According to various embodiments of the present invention, all or part of operations executed on the first electronic device 100 may be executed on another one or more electronic devices, such as the electronic device 102 or the server device 104. According to an embodiment of the present invention, when the first electronic device 100 performs a certain function or service automatically or by a request, the first electronic device 100 requests at least part of a function relating thereto from the external electronic device 102 or the server device 104 instead of or in addition to merely executing the function or service. The electronic device 102 or the server device 104 executes the requested function or an additional function and delivers the execution result to the first electronic device 100. The first electronic device 100 provides the requested function or service by processing the execution result, such as through cloud computing, distributed computing, or client-server computing.

The connection control module 180 supports a communication channel establishment between the first electronic device 100 and the second electronic device 200 or between the first electronic device 100 and the third electronic device 300. Additionally, the connection control module 180 supports a multi-connection between the second electronic device 200 and the third electronic device 300 corresponding to a setting. Accordingly, the connection control module 180 collects device information of the second electronic device 200 and provides the device information to the third electronic device 300.

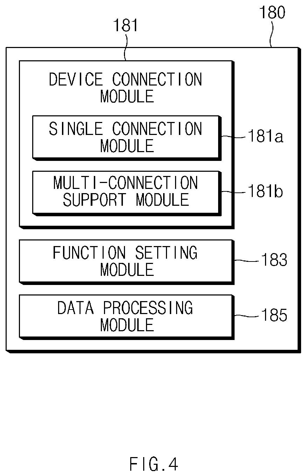

FIG. 4 illustrates a connection control module according to various embodiments of the present invention.

Referring to FIG. 4, the connection control module 180 includes a device connection module 181, a function setting module 183, and a data processing module 185.

The device connection module 181 includes a single connection module 181a and a multi-connection support module 181b.

The single connection module 181a establishes one short-range communication channel with another electronic device corresponding to a specified setting. For example, when performing an event relating to the management of the first communication module 171, the single connection module 181a performs a surrounding search and establishes a communication channel based on the search result. According to an embodiment of the present invention, if the second electronic device 200 is found, the single connection module 181a establishes a communication channel with the second electronic device 200. Accordingly, the single connection module 181a finds the second electronic device 200 by managing the first communication module 171 in a specified period or in real time. If a plurality of electronic devices is found, the single connection module 181a establishes a communication channel with an electronic device having a recent connection history. According to another embodiment, if a plurality of electronic devices is found, the single connection module 181a establishes a communication channel with a specified electronic device. The single connection module 181a allocates a priority to a plurality of connectable electronic devices and adjusts the connections of the electronic devices based on priority information of the found electronic device. According to another embodiment, while establishing a communication channel with a specific electronic device, the single connection module 181a controls to prevent a connection attempt with another electronic device. According to another embodiment, if a specified input event occurs while the single connection module 181a establishes a communication channel with a specified electronic device, the single connection module 181a performs surrounding search and establishes a communication channel with another electronic device based on the search result.

The multi-connection support module 181b searches for electronic devices according to a setting or corresponding to a specified input event occurrence and supports a multi-connection or a single connection of at least one electronic device based on the search result. For example, the multi-connection support module 181b performs a surrounding search corresponding to the specified input event occurrence and performs a multi-connection with electronic devices included in the first connection list 131 among electronic devices included in the search result. During this operation, when one electronic device among the found electronic devices is included in the first connection list 131, the multi-connection support module 181b supports a single connection.

For example, the multi-connection support module 181b performs a connection with the third electronic device 300 while being connected to the second electronic device 200. The multi-connection support module 181b determines whether there is a nearby electronic device in a pairing state by managing the first communication module 171 in a specified period or in real time. If, for example, the third electronic device 300 is in a pairing state within a search range, the multi-connection support module 181b is connected to the third electronic device 300. The search range may be different corresponding to the type of communication modules.

According to various embodiments of the present invention, when the third electronic device 300 is connected, the multi-connection support module 181b queries the second electronic device 200 as to whether the second electronic device 200 establishes a communication channel with the third electronic device 300. When the second electronic device 200 does not establish a communication channel with the third electronic device 300, the multi-connection support module 181b provides Bluetooth® device address information of the second electronic device 200 to the third electronic device 300. Additionally, the multi-connection support module 181b requests that the second electronic device 200 establish a communication channel with the third electronic device 300. During this operation, if the second electronic device 200 does not exist in the connection history of the third electronic device 300, the multi-connection support module 181b releases a connection established with the third electronic device 300. Then, the multi-connection support module 181b may be reconnected according to a request of the third electronic device 300. The multi-connection support module 181b performs a control to maintain a connection of the second electronic device 200 in a connection release state with the third electronic device 300.

According to various embodiments of the present invention, after the third electronic device 300 is connected, during an operation of delivering the device information of the second electronic device 200 to the third electronic device 300, the multi-connection support module 181b provides additional connection information including the identification information of the second electronic device 200. The third electronic device 300 determines which electronic device is connected through an additional connection information check.

The function setting module 183 supports at least one management setting of the single connection module 181a and the multi-connection support module 181b. Accordingly, the function setting module 183 performs a control to output a screen interface through which a single connection setting or a multi-connection setting is available, to the first display 160. The function setting module 183 activates the single connection setting or multi-connection setting corresponding to an input event.

The data processing module 185 perform data processing in a single connection state or a multi-connection state. For example, when single-connected to the second electronic device 200, the data processing module 185 delivers specified information received by the first electronic device 100, such as a call connection, message, or system information relating to a battery or processor management of the first electronic device 100, to the second electronic device 200. According to another embodiment, the data processing module 185 outputs information received from the second electronic device 200 through the first display 160 or the first input/output interface 150. When a call connection is received, the data processing module 185 delivers the call to the second electronic device 200. When a call connection acceptance or rejection message is received from the second electronic device 200, the data processing module 185 establishes a channel relating to a call connection or rejects the call connection corresponding to the message.

According to various embodiment of the present invention, when the data processing module 185 is in a multi-connection state, the data processing module 185 delivers information received by the first communication module 171 or information received from the second electronic device 200 to the third electronic device 300. According to another embodiment, the data processing module 185 delivers only one of information received by the first communication module 171 and information received from the second electronic device 200 to the third electronic device 300. According to another embodiment, the data processing module 185 sequentially delivers information received by the first communication module 171 and information received from the second electronic device 200 to the third electronic device 300. For example, the data processing module 185 simultaneously or sequentially delivers at least one of a call connection received by the first communication module 171 and a call connection received from the second electronic device 200 to the third electronic device 300. The data processing module 185 simultaneously or sequentially delivers at least one of a text message, chatting message, or e-mail received by the first communication module 171 and a message received from the second electronic device 200, to the third electronic device 300.

When in a multi-connection state, the data processing module 185 delivers information received by the first communication module 171 to the third electronic device 300 and stores information received from the second electronic device 200. According to another embodiment, when in a multi-connection state, the data processing module 185 delivers all or part of received information to the third electronic device 300 according to the type of the received information. For example, the data processing module 185 delivers only a call connection received by the first communication module 171 and simultaneously or sequentially delivers a message received by the first communication module 171 and a message provided from the second electronic device 200 to the third electronic device 300.

The data processing module 185 adjusts information according to the device characteristics of the third electronic device 300 and delivers the information during an information delivering process. For example, the data processing module 185 converts the received message into audio information corresponding thereto and delivers audio information to the third electronic device 300. According to another embodiment, the data processing module 185 delivers a sound effect specified according to a message type to the third electronic device 300.

The data processing module 185 processes an input event received from the third electronic device 300. For example, when a call related event such as a call connection acceptance or call rejection is received from the third electronic device 300, the data processing module 185 establishes a call channel or processes a call rejection message transmission corresponding to the event. According to another embodiment, when a call related event of the second electronic device 200 is received from the third electronic device 300, the data processing module 185 delivers the call related event to the second electronic device 200.

According to various embodiments of the present invention, an electronic device includes a memory for storing additional connection information of at least one pre-connected other electronic device and a processor connected to the memory. When a specified electronic device is connected, the processor transmits additional connection information connectible with at least one pre-connected other electronic device to the specified electronic device.

As mentioned above, according to various embodiments of the present invention, an electronic device includes a communication interface for establishing a communication channel with at least one another electronic device and a connection control module for controlling a communication connection establishment with at least one another electronic device through the communication interface. When a specified electronic device is connected, the connection control module is set to transmit additional connection information of the at least one other electronic device to the specified electronic device in order to allow at least one pre-connected other electronic device to be connected to the specified electronic device.

The connection control module performs a control to establish at least one of Bluetooth® communication connection, BLE based communication connection, NFMI based communication connection, and E2E wireless based communication connection, with the at least one another electronic device.

The connection control module controls to establish at least one of Bluetooth® communication connection, BLE based communication connection, NFMI based communication connection, and E2E wireless based communication connection, with the specified electronic device.

When the at least one another electronic device has a communication connection history with the specified electronic device, the connection control module controls to deliver at least one of Bluetooth® device address information and identification information of the at least one another electronic device to the specified electronic device.

A second processor of a second electronic device delivers at least one of Bluetooth® device address information and identification information that a connection control module delivers to a third electronic device based on at least one of Bluetooth® communication connection, BLE based communication connection, NFMI based communication connection, and E2E wireless based communication connection.

When the at least one another electronic device has no communication connection history with the specified electronic device, the connection control module delivers at least one of Bluetooth® device address information and a pairing mode entry request of the at least one another electronic device to the specified electronic device and controls to request a connection with the specified electronic device from the at least one another electronic device.

A second processor of a second electronic device delivers at least one of Bluetooth® device address information and a pairing mode entry request delivered by a connection control module to a third electronic device based on at least one of NFMI, E2E, and BLE.

The connection control module controls to release a connection with the specified electronic device.

When the at least one another electronic device is connected to the specified electronic device, the connection control module controls to reconnect to the specified electronic device.

The connection control module searches for and connects the at least one another electronic device based on at least one of a BLE communication method, an E2E communication method, and an NFMI communication method.

The connection control module controls to transmit, to the specified electronic device, device information of electronic devices having a communication connection history with the specified electronic device among at least one another connected electronic device.

The connection control module controls to output a screen interface relating to a single connection setting for allowing the specified electronic device to establish a communication channel with one electronic device or a multi-connection setting for allowing the specified electronic device to establish a communication channel with a plurality of electronic devices.

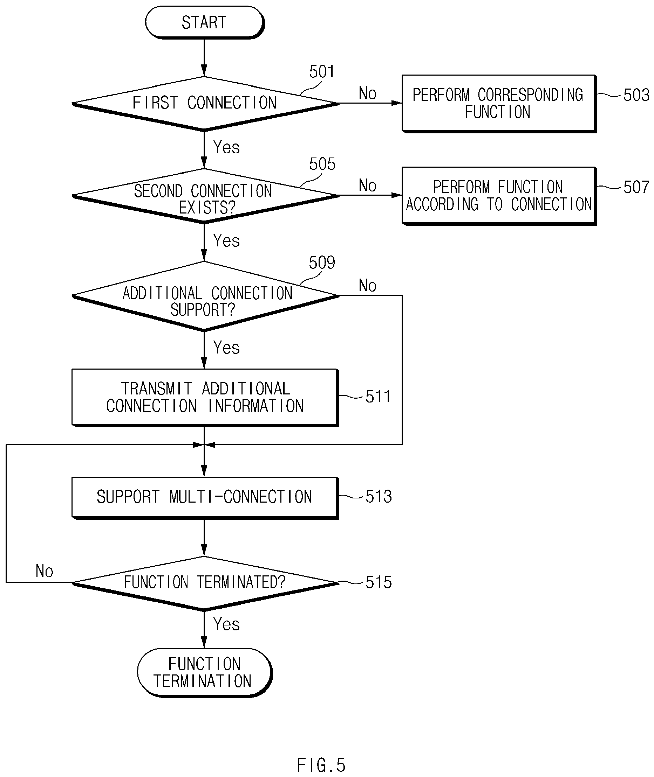

FIG. 5 illustrates a multi-connection related first electronic device management method according to various embodiments of the present invention.

Referring to FIG. 5, in relation to a multi-connection related management method of the first electronic device 100, in step 501, the first electronic device 100 determines whether an event occurs relating to a request of a first connection, such as a communication channel, a wireless communication channel, a short-range communication channel, or a short-range wireless communication channel For example, the first connection relates to a communication channel establishment with the third electronic device 300. Accordingly, the first electronic device 100 searches the surrounding area in a specified period or in real time to determine whether there the third electronic device 300 is nearby in a pairing state. If the third electronic device 300 is nearby in a pairing state, the first electronic device 100 establishes a first connection with the third electronic device 300. According to various embodiments of the present invention, the first electronic device 100 receives a request message relating to pairing performance from the third electronic device 300. In this case, the first electronic device 100 establishes a communication channel with the third electronic device 300 by performing a pairing process with the third electronic device 300.

If an event relating to the first connection request does not occur, the first electronic device 100 processes a function performance corresponding to an event type in step 503. For example, the first electronic device 100 supports a file playback function, an image collection function, and a call connection function corresponding to the occurred event type.

If an event relating to the first connection request occurs, the first electronic device 100 determines whether there is a second connection with the second electronic device 200 in step 505. If there is no second connection, the first electronic device 100 performs a function according to a connection in step 507. For example, the first electronic device 100 transmits specified information to the third electronic device 300 or receives information from the third electronic device 300. During this operation, the first electronic device 100 processes at least one of an information output relating to a first connection with the third electronic device 300 and a transmitted/received information output.

If there is a second connection in step 505, the first electronic device 100 determines whether there is an additional connection support in step 509. When there occurs an additional connection support related setting, such as a multi-connection setting, or an input event, such as an event relating to a multi-connection execution, the first electronic device 100 processes an additional connection information transmission in step 511. In relation to the additional connection information transmission, the first electronic device 100 collects Bluetooth® device address information of the second electronic device 200 relating to a second connection. The first electronic device 100 transmits the collected device information to the third electronic device 300. If there is no additional connection support setting or no related event occurrence, the first electronic device 100 skips step 511.

In step 513, the first electronic device 100 establishes a multi-connection with the second electronic device 200 or the third electronic device 300 and processes a function support according to the multi-connection. For example, the third electronic device 300 may be connected to the second electronic device 200 or to the first electronic device 100. In relation to a connection between the second electronic device 200 and the third electronic device 300, the first electronic device 100 requests a connection with the third electronic device 300 from the second electronic device 200. Correspondingly, the third electronic device 300 enters a pairing mode and the second electronic device 200 establishes a communication channel by scanning the third electronic device 300 in the pairing mode.

In step 515, the first electronic device 100 determines whether an event relating to function termination occurs. When a function termination related event occurs, the first electronic device 100 performs function termination processing. If there is no function termination related event, the first electronic device 100 returns to step 513 and maintain a multi-connection support.

According to various embodiments of the present invention, when a new connection request occurs in a multi-connection support state, the first electronic device 100 supports multi-connection support processing according to a new connection request. For example, while the second electronic device 200 and the third electronic device 300 are connected, if a fourth electronic device is connected, the first electronic device 100 provides device information of the second electronic device 200 and the third electronic device 300 to the fourth electronic device corresponding to a multi-connection setting. Then, based on the foregoing method, a multi-connection including the fourth electronic device is processed.

According to various embodiments of the present invention, the first electronic device 100 distinguishes and then stores a multi-connection setting of a third electronic device 300 by each device. For example, when the specified third electronic device 300 is connected by a user setting, the first electronic device 100 processes a multi-connection by providing the device information of the second electronic device 200. According to another embodiment, when a fourth electronic device that is not specified or has no user setting is connected, the first electronic device 100 processes to prevent an additional device connection information provision from being performed. Information of electronic devices relating to a multi-connection setting is included in the first connection list 131 and is managed.

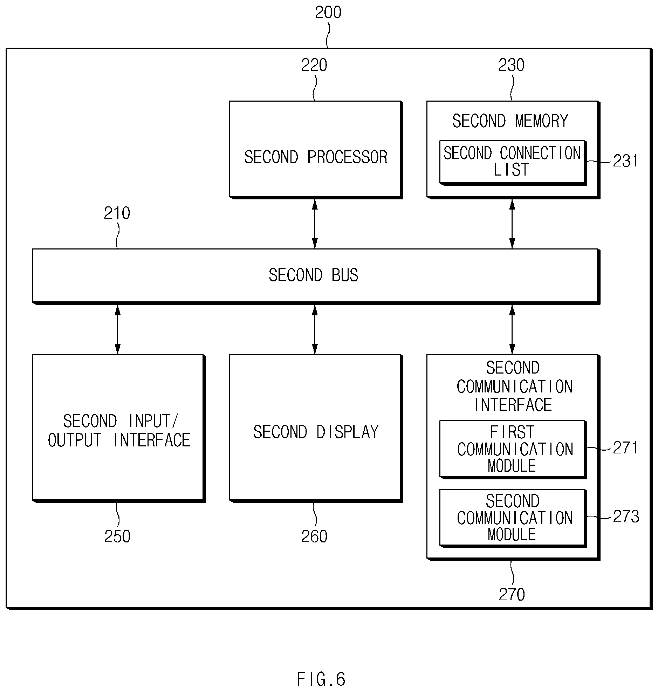

FIG. 6 illustrates a second electronic device according to various embodiments of the present invention.

Referring to FIG. 6, the second electronic device 200 includes a second bus 210, a second processor 220, a second memory 230, a second input/output interface 250, a second display 260, and a second communication interface 270. According to an embodiment of the present invention, the second electronic device 200 may omit at least one of the components or may additionally include a different component.

The second bus 210 processes the delivery of signals relating to the management of the second electronic device 200. For example, the second bus 210 processes a signal delivery necessary for a communication channel establishment with the first electronic device 100. Additionally, the bus 210 supports a connection with the third electronic device 300. The second bus 210 processes a signal delivery necessary for pairing with the third electronic device 300. The second processor 220 processes signals necessary for the management of the second electronic device 200. According to an embodiment of the present invention, when receiving a connection request message relating to a communication channel establishment from the first electronic device 100, the second processor 220 controls to establish a communication channel by managing the first communication module 271 of the second communication interface 270. Upon the receipt of a request for communication channel establishment with the third electronic device 300 from the first electronic device 100, the second processor 220 controls to establish a communication channel with the third electronic device 300 that enters a pairing mode based on the first communication module 271.

When there is a previous connection history with the third electronic device 300, the second processor 220 establishes a communication channel with the third electronic device 300 without a pairing operation corresponding to a connection request message reception of the third electronic device 300. During this operation, the second processor 220 manages a second connection list 231. For example, when receiving a request for connection with the third electronic device 300 from the first electronic device 100, the second processor 220 determines whether there is a previous connection history with the third electronic device 300 by checking the second connection list 231 stored in the second memory 230.

The second processor 220 processes a communication channel establishment with the first electronic device 100 based on a BLE communication function included in the first communication module 271. While not establishing a communication channel with the first electronic device 100, the second processor 220 searches to determine whether there is the first electronic device 100 around the second processor 220 by using a BLE communication function in a specified period or in real time. If the first electronic device 100 is within the search range, the second processor 220 processes to establish a communication channel.

As mentioned above, the second processor 220 processes a multi-connection with the first electronic device 100 and the third electronic device 300. During multi-connection, the second processor 220 delivers at least one of a call connection and a message to at least one of the first electronic device 100 and the third electronic device 300 according to specified priority information or a specified setting. For example, when receiving a call connection in a single connection state with the first electronic device 100, the second processor 220 delivers the single connection state call connection to the connected first electronic device 100 or the connected third electronic device 300. When receiving a call connection in a multi-connection state with the first electronic device 100 and the third electronic device 300, the second processor 220 delivers the multi-connection state call connection to the third electronic device 300. According to another embodiment, the second processor 220 simultaneously delivers a call connection to the first electronic device 100 and the third electronic device 300. According to an embodiment of the present invention, when receiving a message in a single connection state, the second processor 220 delivers the message to the connected first electronic device 100 or the connected third electronic device 300. When receiving a message in a multi-connection state, the second processor 220 delivers the message to at least one of the first electronic device 100 and the third electronic device 300 corresponding to a specified setting. During this operation, the second processor 220 delivers audio information obtained by converting text into voice, corresponding to the received message, to the third electronic device 300.

The second memory 230 stores the kernel, middleware, API, and application necessary for the management of the second electronic device 200. According to an embodiment of the present invention, the second memory 230 stores information relating to the management of the second electronic device 200. For example, while not connected to the first electronic device 100 or the third electronic device 300, the second memory 230 stores information corresponding to a call connection request or a message received from another electronic device. The stored information is delivered when the third electronic device 100 or the second electronic device 300 is connected.

The second memory 230 stores the second connection list 231, which includes device identification information of devices having a call connection history based on the first communication module 271. Information stored in the second connection list 231 is delivered to the first electronic device 100 when the first electronic device 100 is connected or corresponding to a request of the connected first electronic device 100. According to another embodiment, a connection history stored in the second connection list 231 is used when the first electronic device 100 requests a connection of the third electronic device 300.

The second input/output interface 250 includes at least one device relating to an input event generation of the second electronic device 200, such as at least one button. Additionally, the second input/output interface 250 includes an audio module that processes or outputs audio information collection based on a call connection of the second electronic device 200. According to various embodiments of the present invention, the audio module outputs a guide sound for a multi-connection state with the first electronic device 100 or the third electronic device 300.

The second display 260 outputs various screen interfaces relating to the management of the second electronic device 200. For example, the second display 260 has a relatively limited size or performance in relation to the first display 160 of the first electronic device 100. The second display 260 outputs a screen interface relating to a call connection request reception (or message) and a screen interface relating to the delivery of a call connection request (. According to various embodiments of the present invention, the second display 260 outputs information on missed calls or unchecked messages when the first electronic device 100 or the third electronic device 300 is connected. According to another embodiment, the second display 260 outputs a screen interface relating to a state delivered to at least one of the first electronic device 100 and the third electronic device 300.

The second communication interface 270 may include a first communication module 271 for establishing a short-range wireless communication channel or a Bluetooth® wireless communication channel with the first electronic device 100 or the third electronic device 300. According to various embodiments of the present invention, the first communication module 271 includes at least one of a BLE communication module, an E2E communication module, and an NFMI communication module. Additionally, the second communication interface 270 includes a second communication module 273 for performing a mobile communication function with another electronic device. The first communication module 271 supports a Bluetooth® communication function and a BLE communication function, and establishes a multi-connection with the first electronic device 100 and the third electronic device 300. The second communication module 273 relates to a mobile communication function support of the second electronic device 200. The second communication module 273 receives a call connection or a message.

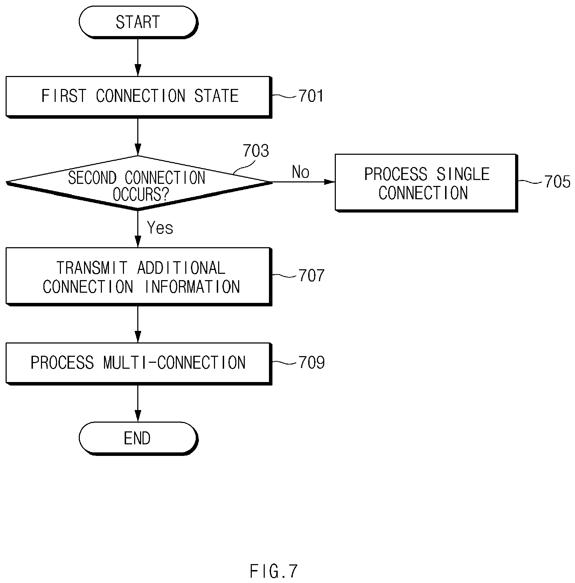

FIG. 7 illustrates a multi-connection related second electronic device management method according to various embodiments of the present invention.

Referring to FIG. 7, in step 701, the second electronic device 200 has a first connection state with the first electronic device 100 or the third electronic device 300. For example, if the second electronic device 200 is a watch type electronic device, the second electronic device 200 has a first connection state with the first electronic device 100 according to a user setting. During this operation, the first connection, for example, corresponds to a short-range wireless communication channel (or a Bluetooth® communication channel) based on the first communication module 271 of the second communication interface 270. The second electronic device 200 performs a surrounding search in a specified period or in real time based on a BLE communication function and establishes a communication channel with the first electronic device 100 or the third electronic device 300 that is performing a BLE communication function. According to various embodiments of the present invention, the second electronic device 200 has a first connection state with the third electronic device 300 of a headset type or a neck circle type according to user management. In this case, the second electronic device 200 searches for the third electronic device 300 in a pairing state around the second electronic device 200 corresponding to a specified period or an input event occurrence.

When the third electronic device 300 in a pairing state is found, the second electronic device 200 establishes a communication channel. According to various embodiments of the present invention, the third electronic device 300 uses a BLE communication function. In this case, the second electronic device 200 performs a communication connection based on the BLE communication function. In relation to the BLE communication function management, the second electronic device 200 may have a connection history with the first electronic device 100 or the third electronic device 300. Hereinafter describes when the second electronic device 200 maintains a first connection with the third electronic device 300.

In step 703, when an event occurs, the second electronic device 200 determines whether the event relates to a second connection occurrence. For example, when having a first connection with the third electronic device 300, the second electronic device 200 determines whether a second connection request with the first electronic device 100 occurs. Accordingly, the second electronic device 200 maintains the first communication module 271 in an activation state. According to another embodiment, the second electronic device 200 maintains the BLE function of the first communication module 271 in an activation state. If the event does not relate to the second connection occurrence, in step 705, the second electronic device 200 performs single connection processing. For example, the second electronic device 200 processes information transmission/reception with the third electronic device 300 in a first connection state corresponding to information occurrence.

If the event relates to the second connection occurrence, in step 707, the second electronic device 200 processes an additional connection information transmission. Accordingly, the second electronic device 200 establishes a communication channel corresponding to the second connection with the first electronic device 100. The second electronic device 200 transmits device information of the connected first electronic device 100, as additional connection information, to the third electronic device 300. During this operation, the second electronic device 200 determines whether the first electronic device 100 has a connection history with the third electronic device 300. For example, the second electronic device 200 transmits a query on whether there is a connection history with the third electronic device 300 to the first electronic device 100. The second electronic device 200 determines whether the first electronic device 100 has a connection history with the third electronic device 300 based on a response to the query received from the first electronic device 100. When transmitting additional connection information on the first electronic device 100, the second electronic device 200 simultaneously delivers the identification information of the first electronic device 100. Correspondingly, the third electronic device 300 is connected to the first electronic device 100.

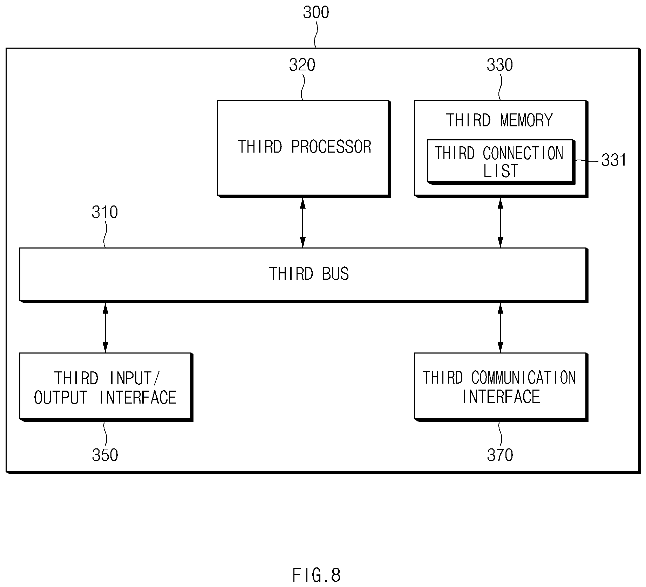

In step 709, the second electronic device 200 performs multi-connection processing with other electronic devices. For example, the second electronic device 200 has a connection state with the third electronic device 300 and the first electronic device 100. The first electronic device 100 has a connection state with the second electronic device 200 and the third electronic device 300. The third electronic device 300 has a connection state with the second electronic device 200 and the first electronic device 100. According to various embodiments of the present invention, corresponding to a setting, only the third electronic device 300 has a multi-connection state with the first electronic device 100 and the second electronic device 200. Corresponding to a setting, when the third electronic device 300 has a multi-connection, the first electronic device 100 has a single connection state with the third electronic device 300 (or the second electronic device 200). According to various embodiments of the present invention, the first electronic device 100 has no connection history with the third electronic device 300. In this case, as described with reference to FIG. 5, the second electronic device 200 requests a pairing mode entry from the third electronic device 300 in addition to the device information transmission of the first electronic device 100 and requests a connection with the third electronic device 300 from the first electronic device 100. FIG. 8 illustrates a third electronic device according to various embodiments of the present invention.

Referring to FIG. 8, the third electronic device 300 includes a third bus 310, a third processor 320, a third memory 330, a third input/output interface 350, and a third communication interface 170. According to an embodiment of the present invention, the third electronic device 300 may omit at least one of the components or may additionally include a different component. The third bus 310 processes the delivery of signals relating to the management of the third electronic device 300. For example, the third bus 310 delivers a connection request of at least one of the first electronic device 100 and the second electronic device 200 to the third processor 320, and delivers information that the first electronic device 100 or the second electronic device 200 transmits, and which is received through the third communication interface 370, to the third memory 330 or the third input/output interface 350 corresponding to processing of the third processor 320.

The third processor 320 processes signals relating to the management of the third electronic device 300. For example, the third processor 320 processes a pairing mode entry corresponding to an input event through the third input/output interface 350. According to various embodiments of the present invention, the third processor 320 differently processes a connection with electronic devices according to a single connection setting or a multi-connection setting. For example, when in a single connection setting state, the third processor 320 establishes a communication channel with only an initially connection requested electronic device. According to another embodiment, the third processor 320 establishes a communication channel with only a specified electronic device. According to another embodiment, the third processor 320 establishes a communication channel with only one electronic device corresponding to a specified priority. When an electronic device having a relatively high priority approaches, the third processor 320 performs processing to establish a new connection with an electronic device having a high priority. For example, if the third processor 320 includes a configuration state that the first electronic device's priority is higher than the second electronic device's priority and then the first electronic device and the second electronic device approaches substantially simultaneously, the third processor 320 establishes a communication channel with only the first electronic device. According to various embodiments of the present invention, when in a multi-connection setting state, the third processor 320 establishes a multi-connection with a plurality of electronic devices by performing a surrounding search in a specified period or in real time. When electronic devices registered in the third connection list 331 are found, the third processor 320 establishes a multi-connection with each electronic device. According to various embodiments of the present invention, the third processor 320 establishes a communication channel by performing a pairing operation with the first electronic device 100 having no connection history, and establishes a multi-connection as other specified electronic devices having a connection history are found by performing a specified periodic or real time search.

According to various embodiments of the present invention, corresponding to an input event or a specified setting, the third processor 320 establishes a communication channel with the first electronic device 100 or the second electronic device 200 and receives additional connection information including device information from the connected first electronic device 100 or the second electronic device 200. The third processor 320 compares device information included in additional connection information with a third connection list 331 of the third memory 330 in order to determine whether an electronic device corresponding to corresponding device information has a connection history. When the third processor 320 has a connection history associated with the first electronic device or the second electronic device, the third processor 320 performs multi-connection with the first electronic device or the second electronic device. For example, when connected to the first electronic device 100, the third processor 320 automatically processes a multi-connection with the second electronic device 200 with which the third electronic device 300 has a connection history as the second electronic device 200 approaches into a searchable range. When receiving information from at least one of the first electronic device 100 and the second electronic device 200 through the third communication interface 370, the third processor 320 outputs the information through the third input/output interface 350. According to various embodiments of the present invention, when receiving text information, the third processor 320 converts the text information into voice and delivers the converted voice to the third input/output interface 350.

The third memory 330 stores programs or data relating to the management of the third electronic device 300, such as the kernel, middleware, API, and application. According to an embodiment of the present invention, the third memory 330 stores a third connection list 331 including information on devices with which the third electronic device 300 has a connection history through the third communication interface 370.

The third input/output interface 350, for example, includes a button for generating an input event relating to a pairing mode entry, a button for generating an event relating to a connection setting change, and a button for controlling the volume adjustment or turning on or off an electronic device. The third input/output interface 350 includes an audio module for outputting audio information. For example, the third input/output interface 350 outputs audio information corresponding to a call connection or a message provided from the first electronic device 100 or the second electronic device 200. According to various embodiments of the present invention, the third input/output interface 350 outputs a guide sound relating to a connection setting.

The third connection interface 370 supports a communication channel establishment of the third electronic device 300. For example, the third communication interface 370 includes at least one of a Bluetooth® communication module, a BLE communication module, an E2E communication module, and an NFMI communication module. The third communication interface 370 has a connection state with one electronic device or a plurality of electronic devices corresponding to a setting or according to a distribution of found surrounding electronic devices. The third communication interface 370 receives information such as a call connection, message, or information relating to a function currently executed on a corresponding electronic device, from at least one connected electronic device. Information received by the third communication interface 370 is outputted through the third input/output interface 350 corresponding to a control of the third processor 320.

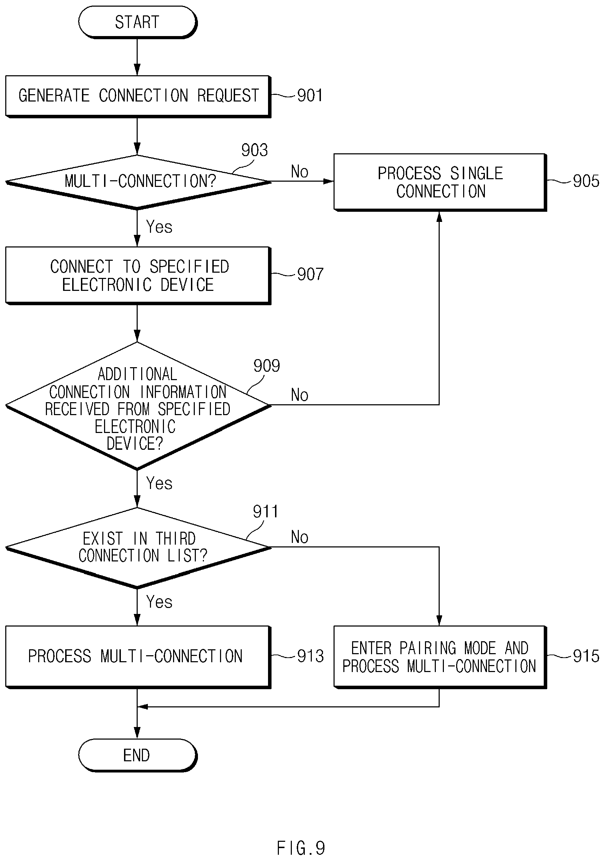

FIG. 9 illustrates a multi-connection related third electronic device management method according to various embodiments of the present invention.

Referring to FIG. 9, a third electronic device 300 receives a connection request occurrence in step 901. For example, the third electronic device 300 receives a state switching relating to communication channel establishment through the third input/output interface 350. According to an embodiment of the present invention, the third electronic device 300 receives a connection request input event based on a Bluetooth® communication module.

In step 903, the third electronic device 300 determines whether the connection request is a multi-connection related request. For example, the third electronic device 300 determines whether an event for requesting a communication channel establishment occurs in a current single connection setting state or in a multi-connection setting state. According to another embodiment, the third electronic device 300 determines whether an event for requesting a single-connection based communication channel establishment occurs or an event for requesting a multi-connection based communication channel establishment occurs. Accordingly, the third electronic device 300 includes a third input/output interface such as a button for generating a single connection establishment event or a multi-connection establishment event.

In the case of a single connection request, the third electronic device 300 processes single connection in step 905. According to another embodiment, when a communication channel establishment related event occurs in a single connection setting state, single connection may be processed. In relation to single connection processing, the third electronic device 300 performs surrounding search and establishes a communication channel by searching for an electronic device having a previous search history. If a plurality of electronic devices is found, the third electronic device 300 establishes a communication channel with an electronic device having a recent history or establishes a communication channel with a specified electronic device.

When a multi-connection related request occurs, the third electronic device 300 performs a connection with a specified electronic device in step 907. For example, the third electronic device 300 performs a surrounding search and establishes a communication channel with at least one electronic device. According to another embodiment, the third electronic device 300 enters a pairing mode state and establishes a communication channel corresponding to a request of the first electronic device 100 or the second electronic device 200.

In step 909, the third electronic device 300 determines whether there is an additional connection information reception from a connected electronic device. If no additional connection information is received from a connected electronic device, the method returns to step 905 and the third electronic device 300 processes a single connection. During this operation, the third electronic device 300 performs a surrounding search in a specified period or in real time, and when an electronic device having a connection history is found from electronic devices, establishes a multi connection.

If additional connection information is received, the third electronic device 300 determines whether Bluetooth® device address information or identification information of an electronic device included in additional connection information exists in a third connection list 331. If there is information on an additionally connected device in the third connection list 331, the third electronic device 300 performs a multi-connection with the currently connected electronic device and an electronic device included in additional connection information in step 913.

If there is no information on an additionally connected device in the third connection list 331, after performing a connection with an electronic device included in additional connection information through pairing mode entry, the third electronic device 300 performs multi-connection processing with a specified electronic device. For example, the third electronic device 300 releases a connection with the first electronic device 100 or the second electronic device 200 connected through the pairing mode entry and enters a pairing mode. Then, the third electronic device 300 performs a connection based on a pairing operation performance with an electronic device corresponding to additional connection information. The third electronic device 300 performs a multi-connection with the first electronic device 100 having a connection history.

According to various embodiments of the present invention, a multi-connection support method includes forming, by an electronic device, a communication channel with a specified electronic device and transmitting additional connection information connectable to at least one pre-connected another electronic device to the specified electronic device.

As mentioned above, according to various embodiments of the present invention, a multi-connection support method includes forming, by an electronic device, a communication channel with a specified electronic device through a communication interface and transmitting, by the electronic device, additional connection information of at least one connected another electronic device to the specified electronic device in order to allow the at least one connected another electronic device to be connected to the specified electronic device.

Forming the communication channel includes establishing, by the electronic device, at least one of Bluetooth® communication connection, BLE based communication connection, NFMI based communication connection, and E2E wireless based communication connection, with the at least one another electronic device.

Forming the communication channel includes, when the electronic device establishes a communication channel with the specified electronic device, establishing at least one of a BLE based communication connection, a Bluetooth® communication connection, an NFMI based communication connection, and an E2E wireless based communication connection, between the specified electronic device and the at least one another electronic device.

The method may further include establishing at least one of a Bluetooth® communication connection, a BLE based communication connection, an NFMI based communication connection, and an E2E wireless based communication connection between the specified electronic device and the at least one another electronic device.

Transmitting the additional connection information includes, when the at last one another electronic device has a communication connection history with the specified electronic device, transmitting, by the electronic device, Bluetooth® device address information and identification information of the at least one another electronic device to the specified electronic device.

Transmitting the additional connection information includes, when the at least one another electronic device has no communication connection history with the specified electronic device, transmitting, by the electronic device, Bluetooth® device address information and a pairing mode entry request of the at least one another electronic device to the specified electronic device and requesting, by the electronic device, a connection with the specified electronic device from the at least one another electronic device.

The method further includes releasing, by the electronic device, a connection with the specified electronic device.

The method further includes, when the at least one another electronic device is connected to the specified electronic device, reconnecting to the specified electronic device.

Transmitting the additional connection information includes transmitting by the electronic device, device information of electronic devices having a communication connection history with the specified electronic device among at least one another connected electronic device connected to the electronic device, to the specified electronic device.

The method further includes outputting a screen interface relating to a single connection setting for allowing the specified electronic device to establish a communication channel with one electronic device or a multi-connection setting for allowing the specified electronic device to establish a communication channel with a plurality of electronic devices.

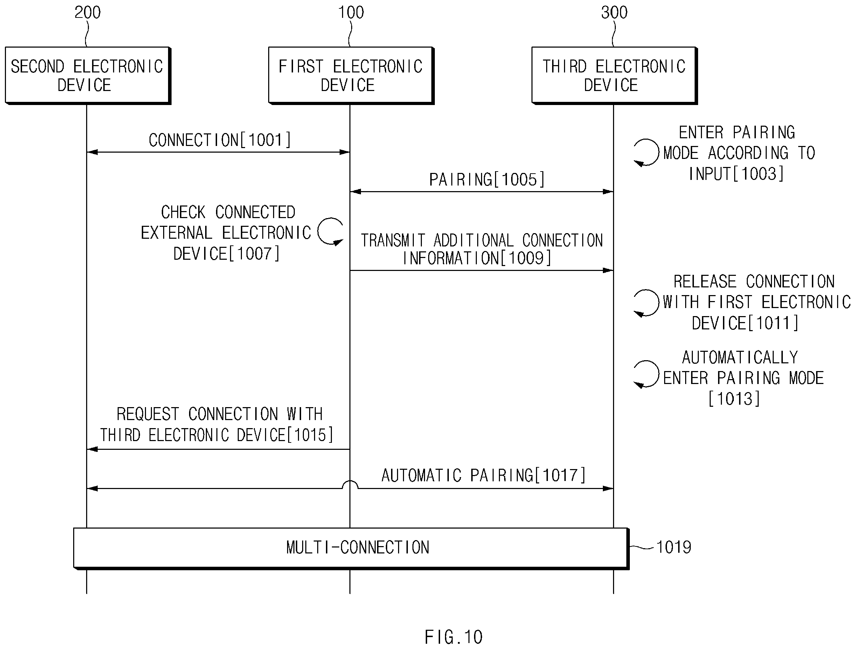

FIG. 10 illustrates a multi-connection method according to various embodiments of the present invention.

Referring to FIG. 10, the first electronic device 100 and the second electronic device 200 have a connection state in step 1001. According to an embodiment of the present invention, the first electronic device 100 may be a smartphone device and the second electronic device 200 may be an electronic smart watch. The first electronic device 100 and the second electronic device 200 establish a Bluetooth® communication channel and perform a mutual search based on a BLE communication function. According to another embodiment, when the Bluetooth® communication channel is released, the first electronic device 100 and the second electronic device 200 perform a mutual search based on the BLE communication function. While establishing a communication channel with the second electronic device 200, the first electronic device 100 searches for another electronic device in a pairing mode state in a specified period or in real time.

In step 1003, the third electronic device 300 performs a pairing mode entry according to an input. For example, while the first electronic device 100 and the second electronic device 200 are connected, a user generates an input event relating to a pairing mode entry by using a third input/output interface 350 included in the third electronic device 300. Correspondingly, the third electronic device 300 shifts into a pairing mode state for establishing a Bluetooth® communication channel. According to various embodiments of the present invention, when power is turned on, the third electronic device 300 automatically shifts into a pairing mode state. According to another embodiment, when turned on, the third electronic device 300 searches for an electronic device having a connection history or a specified electronic device by automatically performing a surrounding search. If there is no electronic device having a connection history or no specified electronic device, the third electronic device 300 automatically enters a pairing mode.

In step 1005, the first electronic device 100 and the third electronic device 300 perform a pairing operation. For example, while maintaining a connection state with the two electronic devices 200, the first electronic device 100 performs a surrounding search in a specified period or in real time to search for the third electronic device 300 in a pairing mode. The first electronic device 100 transmits/receives information relating to a Bluetooth® communication channel establishment to/from the third electronic device 300 and establishes a Bluetooth® communication channel with the third electronic device 300.

In step 1007, the first electronic device 100 determines whether there is a connected external electronic device. For example, the first electronic device 100 determines whether another electronic device besides the third electronic device 300 is in a current connection state. In step 1009, the first electronic device 100 transmits additional connection information to the third electronic device 300. For example, the first electronic device 100 transmits Bluetooth® device address information of the second electronic device 200, as additional connection information, to the third electronic device 300. At this point, the first electronic device 100 includes the identification information of the second electronic device 200 in the additional connection information and then delivers the identification information to the third electronic device 300.

In step 1011, the third electronic device 300 performs a connection release with the first electronic device 100. After receiving the additional connection information, the third electronic device 300 automatically releases a connection with the first electronic device 100 in order to connect to the second electronic device 200 with which the third electronic device 300 has no connection history because the third electronic device 300 should not have any connection with an electronic device in order to perform new pairing operation. In operation 1013, the third electronic device 300 automatically performs a pairing mode entry.

In step 1015, the first electronic device 100 delivers a request for connection with the third electronic device 300 to the second electronic device 200. According to another embodiment, when the first electronic device 100 is released from a connection with the third electronic device 300, the first electronic device 100 delivers connection request information with the third electronic device 300 to the second electronic device 200. According to another embodiment, at the time that the first electronic device 100 determines that the second electronic device 200 has no connection history with the third electronic device 300, a request for connection with the third electronic device 300 is delivered to the second electronic device 200.

In step 1017, the second electronic device 200 performs auto pairing with the third electronic device 300 in a pairing mode. Accordingly, the second electronic device 200 searches for the third electronic device 300 in a pairing mode by managing the first communication module 271 and processes information transmission/reception relating to a Bluetooth® communication channel establishment with the found third electronic device 300. During this operation, since the third electronic device 300 checks information of the second electronic device 200 connected thereto through additional connection information that the first electronic device 100 provides, the third electronic device 300 automatically processes a connection request of the second electronic device 200.

In step 1019, the first electronic device 100, the second electronic device 200, and the third electronic device 300 have a multi-connection state.

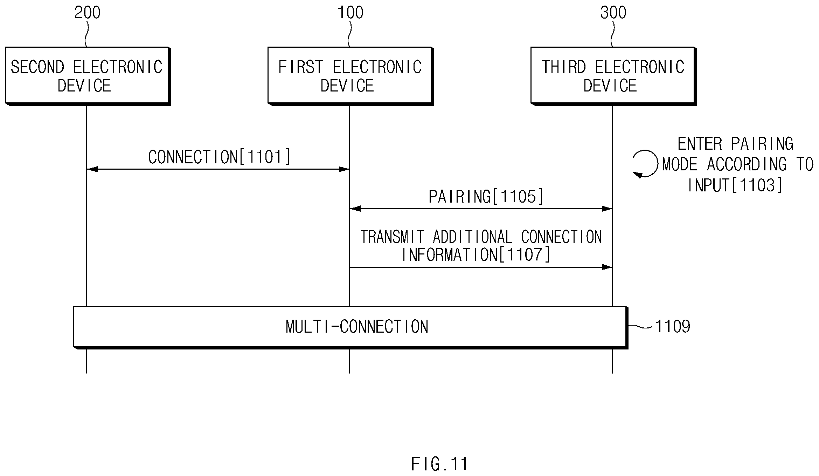

FIG. 11 illustrates a multi-connection method using a connection list according to various embodiments of the present invention.

Referring to FIG. 11, the first electronic device 100 and the second electronic device 200 have a connection state in step 1101. In step 1103, the third electronic device 300 performs a pairing mode entry according to an input. In step 1105, the first electronic device 100 performs a pairing operation with the third electronic device 300 in a pairing mode. According to various embodiments of the present invention, the third electronic device 300 performs a surrounding search according to an input and automatically establishes a communication channel with the electronic device 100 with which the third electronic device 300 has a connection history. In step 1107, the first electronic device 100 transmits additional connection information to the third electronic device 300 corresponding to a specified setting, such as a multi-connection setting). During this operation, the first electronic device 100 transmits device information of at least one electronic device connected thereto in addition to identification information of a corresponding device, as additional connection information, to the third electronic device 300. According to an embodiment of the present invention, the first electronic device 100 determines whether at least one connected electronic device has a connection history with the third electronic device 300 and transmits device information of at least one electronic device having a connection history, as additional connection information, to the third electronic device 300. When a plurality of connected electronic devices have a connection history with the third electronic device 300, the first electronic device 100 transmits additional connection information including device information of corresponding devices to the third electronic device 300.

The third electronic device 300 is connected to the second electronic device 200 based on the information of the second electronic device 200 included in the third connection list. Correspondingly, in step 1109, the first electronic device 100, the second electronic device 200, and the third electronic device 300 have a multi-connection state.

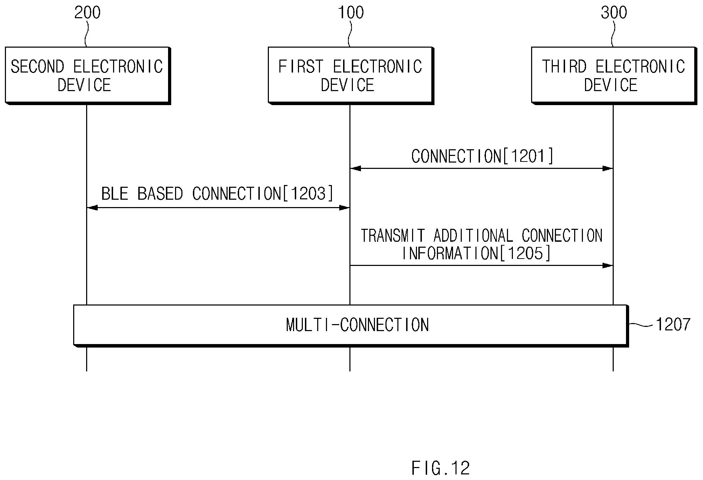

FIG. 12 illustrates a multi-connection method depending on a new connection request according to various embodiments of the present invention.

Referring to FIG. 12, the second electronic device 200 and the third electronic device 300 have a connection state in step 1201. Accordingly, when having a connection history state with the second electronic device 200, the third electronic device 300 searches for the second electronic device 200 to establish a communication channel corresponding to a user input. According to another embodiment, while entering a pairing mode state, the third electronic device 300 establishes a communication channel corresponding to a connection request of the second electronic device 200. The second electronic device 200 may be an electronic smart watch type device and the third electronic device 300 may be a headset type or neck circle type device. A user may perform an exercise such as jogging while wearing the second electronic device 200 and the third electronic device 300. During this operation, the second electronic device 200 may play music and transmit the music to the third electronic device 300. Additionally, the second electronic device 200 receives a call connection or message and transmits the call connection or message to the third electronic device 300. The second electronic device 200 performs BLE communication based connection processing when being connected to the third electronic device 300. For example, the second electronic device 200 performs a peripheral device search in a predetermined period or in real time based on a BLE communication function.

In step 1203, the first electronic device 100 and the second electronic device 200 perform BLE based connection corresponding to the approach of the first electronic device 100. For example, the first electronic device 100 and the second electronic device 200 perform a mutual search based on the BLE communication, and when the mutual search is processed normally, process a Bluetooth® communication channel establishment. During this operation, the second electronic device 200 establishes a communication channel with the first electronic device 100 with which the second electronic device 200 has a connection history. According to another embodiment, the second electronic device 200 outputs device information relating to the found first electronic device 100 and establishes a communication channel with the first electronic device 100 corresponding to a user selection.

In step 1205, the second electronic device 200 transmits additional connection information to the third electronic device 300 corresponding to a connection of the first electronic device 100. During this operation, the second electronic device 200 queries the first electronic device 100 to determine whether the first electronic device 100 has a connection history with the third electronic device 300. When the first electronic device 100 has a connection history with the third electronic device 300, the second electronic device 200 provides additional connection information, including identification information for distinguishing the first electronic device 100 and the second electronic device 200 from the third electronic device 300, of the first electronic device 100 to the third electronic device 300.

In step 1207, the third electronic device 100 performs a multi connection including the first electronic device 100 and the second electronic device 200.

In step 1205, if there is no device information relating to the first electronic device 100 in the third connection list 331, the third electronic device 300 performs a pairing mode entry. As described above, the second electronic device 200 requests the first electronic device 100 to be connected to the third electronic device 300 in a pairing mode.

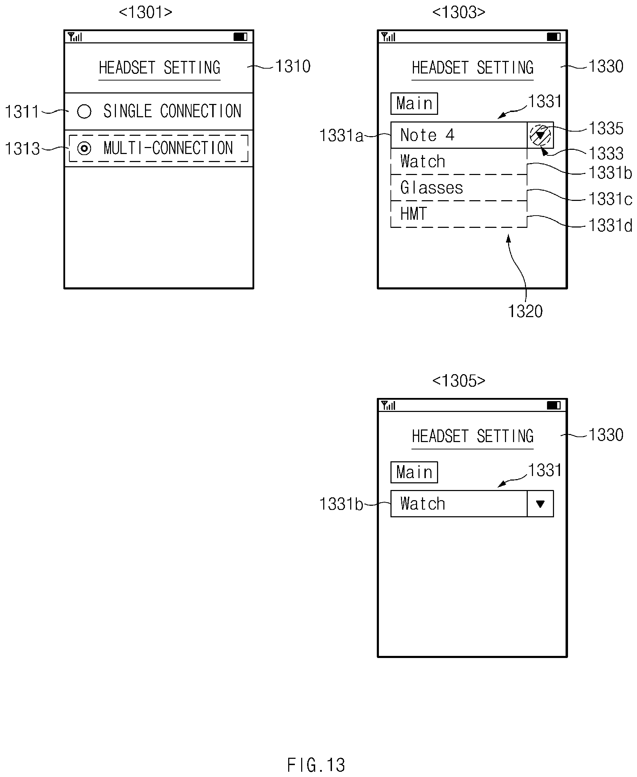

FIG. 13 illustrates a multi-connection setting-related screen according to various embodiments of the present invention.

Referring to FIG. 13, in screenshot 1301, the first electronic device 100 outputs a connection setting screen 1310 according to a specified setting or corresponding to an input event occurrence. Accordingly, the first electronic device 100 provides an icon, a menu, or a specified button relating to the connection setting screen 1310. The connection setting screen 1310 includes a single connection item 1311 and a multi-connection item 1313. The single connection item 1311 allows a specified electronic device to perform single connection. Once a single connection item 1311 is set, the first electronic device 100 delivers setting information to the connected third electronic device 300. According to another embodiment, when the third electronic device 300 is connected, the first electronic device 100 delivers the setting information.

When the multi-connection item 1313 is selected, as shown in screenshot 1303, the first electronic device 100 outputs a multi-connection setting screen 1330. The multi-connection setting screen 1330 includes a setting device display area 1331, a setting device selection area 1333, and a setting device list 1320. When an event relating to the setting device selection area 1333, for example, a touch event 1335 occurs, the multi-connection setting screen 1330 displays the setting device list 1320. The setting device list 1320 includes items such as a first device item 1331a, a second device item 1331b, a third device item 1331c, and a fourth device item 1331d. A currently set item among items included in the setting device list 1320 is outputted to the setting device display area 1331.

When a specific item in the setting device list 1320, for example, the second device item 133b, is selected, the first electronic device 100, as shown in screenshot 1305, outputs a modified item to the setting device display area 1331. When a multi-connection setting is changed, the first electronic device 100 transmits setting change information to a corresponding electronic device. According to an embodiment of the present invention, when a multi-connection of the third electronic device 300 is released, the first electronic device 100 delivers setting change information relating to a multi-connection release to the third electronic device 300. Additionally, the first electronic device 100 delivers multi-connection setting information to a fourth electronic device, which in screenshot 1305 is a device corresponding to the second device item 1331b. Correspondingly, even if the third electronic device 300 is connected to the first electronic device 100, additional connection information for multi-connection may not be provided. Additionally, when the fourth electronic device is connected to the first electronic device 100, the first electronic device 100 provides additional connection information to the fourth electronic device. According to various embodiments of the present invention, the multi-connection setting screen 1330 selects a plurality of electronic devices. For example, the first electronic device 100 supports to select at least one of a plurality of electronic devices included in the setting device list 1320. When selected device items are connected, the first electronic device 100 transmits additional connection information including device information and identification information of other electronic devices connected the first electronic device 100 to an electronic device corresponding to the selected device item.

According to various embodiments of the present invention, the screen interface may be provided through the second display 260 of the second electronic device 200. For example, when the second electronic device 200 is an electronic smart watch type, a user may perform a connection setting by using at least one of the second input/output interface and the second display 260 while wearing or not wearing the second electronic device 200.

Although it is described above that the first electronic device 100 provides a screen interface, various embodiments of the present invention are not limited thereto. For example, the screen interfaces may be provided through the second display 260 of the second electronic device 200.

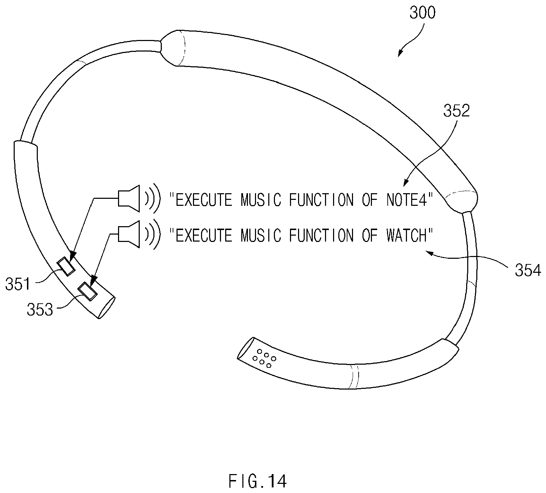

FIG. 14 illustrates an electronic device management relating to multi-connection setting change according to various embodiments of the present invention.

Referring to FIG. 14, the third electronic device 300 may be provided in a form of a headset device or a neck circle or head circle device. The third electronic device 300 is a circular device that is mounted on a neck portion of a user to allow the user to listen to audio information, or is at least partly mounted on a neck portion such that a part of the third electronic device 300 outputs audio information to the user's ear. The third electronic device 300, for example, has a form in which a display area is limited or not disposed. According to an embodiment of the present invention, the third electronic device 300 outputs audio information based on an audio module. For example, the third electronic device 300 receives and outputs audio information from at least one connected another electronic device. According to another embodiment, when receiving text information, the third electronic device 300 converts the text information to voice and outputs the voice.

According to an embodiment of the present invention, when an input event relating to the first input button 351 occurs, the third electronic device 300 outputs a guide sound 352 relating to a single connection setting for processing a function of the first electronic device 100 through a single connection. Accordingly, when an input event relating to the first input button 351 occurs, the third electronic device 300 determines a connection state with the first electronic device 100, and when there is no connection therebetween, performs processing for a connection with the first electronic device 100. If the first electronic device 100 is not found, the third electronic device 300 outputs a guide sound corresponding to an error message for indicating search failure of the first electronic device 100.

According to an embodiment of the present invention, when an input event relating to the second input button 353 occurs, the third electronic device 300 outputs a guide sound 354 relating to a single connection setting for processing a function of the second electronic device 200 through a single connection. Accordingly, when an input event relating to the second input button 353 occurs, the third electronic device 300 determines a connection state with the second electronic device 200. If there is no connection therebetween, the third electronic device 300 searches for the unconnected second electronic device 200 with which to perform connection and requests a specified function execution from the second electronic device 200.

According to various embodiments of the present invention, the third processor 300 includes an input/output interface relating to a single connection setting or a multi-connection setting. According to an embodiment of the present invention, the third electronic device 300 manages the first input button 351 as an input button relating to single connection setting and manages the second input button 353 as an input button relating to multi-connection setting. For example, when a specified event such as a long press event relating to the first input button 351 occurs, the third electronic device 300 recognizes the specified event as a single connection setting request event and processes to perform a connection with one electronic device. During this connection process with one electronic device, after entering a pairing mode, the third electronic device 300 establishes a single connection with a specified electronic device. According to another embodiment, the third electronic device 300 establishes a single connection with a device with which the third electronic device 300 has a recent connection history (e.g., a connection history associated with relatively more recently connected than other device) or a specified electronic device by performing a surrounding search.

According to another embodiment, when a specified event such as a long press event relating to the second input button 353 occurs, the third electronic device 300 recognizes the specified event as a multi-connection setting request event and correspondingly processes a multi-connection. For example, the third electronic device 300 requests a multi-connection from the first electronic device 100 and receives additional connection information from the first electronic device 100. The third electronic device 300 processes a multi-connection based on the received additional connection information.

As mentioned above, the third electronic device 300 distinguishes the first electronic device 100 from the second electronic device 200 based on additional connection information including device identification information of the second electronic device 200 during a connection process with the first electronic device 100. Accordingly, when an input event specified based on the third input/output interface 350 included in the third electronic device 300 occurs, a corresponding input event is delivered to the first electronic device 100 or the second electronic device 200. For example, when a specified first input event occurs, the third electronic device 300 delivers a message relating to a specified function request to the first electronic device 100. According to another embodiment, when a specified first input event occurs, the third electronic device 300 delivers a message relating to a specified function request of the second electronic device 200 to the first electronic device 100. Correspondingly, the first electronic device 100 delivers to the second electronic device 200 a message relating to a specified function request of the second electronic device 200 received from the third electronic device 300. The second electronic device 200 executes a function corresponding to the received message and delivers information corresponding to the function execution to the third electronic device 300. In relation to the function execution, the first electronic device 100 or the second electronic device 200 performs a music playback function, a voice recognition function, and a voice based execution function. For example, corresponding to the type of an input event occurring from the third electronic device or corresponding to an input event occurrence point, at least one of the first electronic device 100 and the second electronic device 200 performs music playback and transmits the played audio information to the third electronic device 300.

According to another embodiment, the third electronic device 300 collects user voice data and transmits the user voice data to the first electronic device 100 or the second electronic device 200. According to an embodiment of the present invention, when a user presses a specified button included in the third electronic device 300 and performs a voice utterance, the third electronic device 300 collects the voice data and delivers the voice data to the first electronic device 100 or the second electronic device 200 mapped into a specified button. The first electronic device 100 or the second electronic device 200 automatically executes a voice recognition function or a voice-based execution function corresponding to a specified event and voice reception. The first electronic device 100 or the second electronic device 200 stores a voice recognition result, and delivers the voice recognition result to the external electronic device 102, or performs a function corresponding to the voice recognition result, such as sleep mode entry, lock screen release, a call forwarding function, web information collection and output, a specified sound source playback, missed calls display or outputting an unchecked message guide as audio or video. According to various embodiments of the present invention, the third electronic device 300 determines whether to deliver a function execution request, which is specified according to a press operation such as the number of pressing times during a specified time, a press time, or a press pattern, on the same button included in the third input/output interface 350, to the first electronic device 100 or the second electronic device 200.

According to another embodiment, the third electronic device 300 differently determines the type of a function to be executed according to a press operation with respect to the same button. During the above-mentioned execution process, the third electronic device 300 outputs type information of a function executed corresponding to a press operation or type information of an electronic device to request a function as a sound guide and then executes the function. When a specified button press operation occurs, the third electronic device 300 cancels a function to be executed.

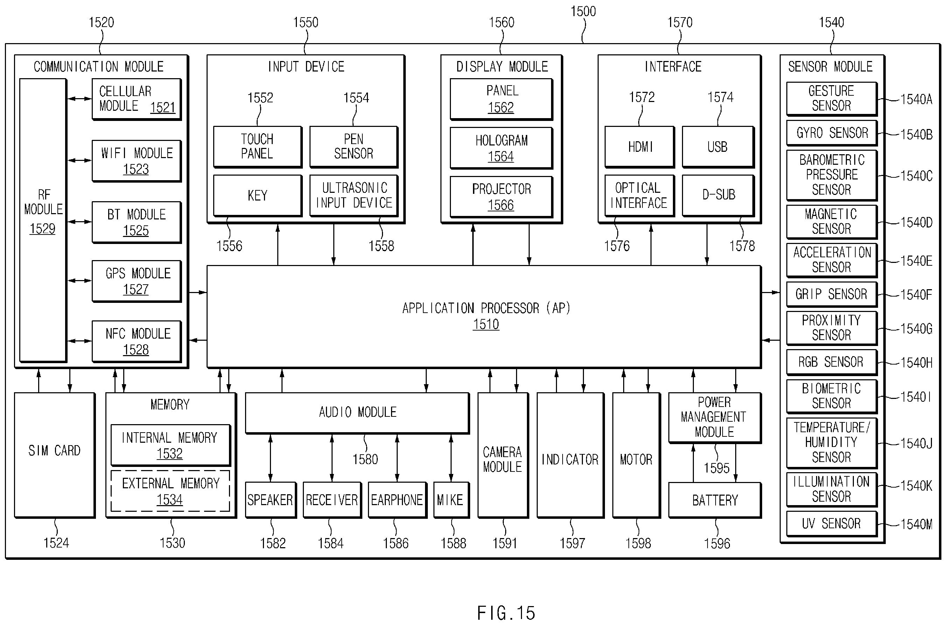

FIG. 15 is a block diagram illustrating an electronic device according to various embodiments of the present invention.

Referring to FIG. 15, the electronic device 1500 may include all or part of at least one of the first electronic device 100 shown in FIG. 3, the second electronic device 200 shown in FIG. 6, and the third electronic device 300 shown in FIG. 8. The electronic device 1500 includes at least one application processor (AP) 1510, a communication module 1520, a subscriber identification module (SIM) 1524, a memory 1530, a sensor module 1540, an input device 1550, a display module 1560, an interface 1570, an audio module 1580, a camera module 1591, a power management module 1595, a battery 1596, an indicator 1597, and a motor 1598.

The processor 1510 controls a plurality of hardware or software components connected to the processor 1510 and performs various data processing and operations by executing an operating system or an application program. The processor 1510 may be implemented with a system on chip (SoC). may further include a graphic processing unit (GPU) and/or an image signal processor, and includes at least part of the components shown in FIG. 15, such as the cellular module 1521. The processor 1510 loads commands or data received from at least one of other components, such as a nonvolatile memory, and processes and stores the commands or data in the nonvolatile memory.

The communication module 1520 has the same or similar configuration to at least one of the communication interfaces 170, 270, and 370. The communication module 1520, for example, includes the cellular module 1521, a Wi-Fi module 1523, a Bluetooth® module 1525, a GPS module 1527, an NFC module 1528, a radio frequency (RF) module 1529, a BLE module, an NFMI module, and an E2E Wireless module.

The cellular module 1521 provides voice call, video call, text service, or Internet service through a communication network. According to an embodiment of the present invention, the cellular module 1521 performs a distinction and authentication operation on the electronic device 1500 in a communication network by using a SIM card 1524. The cellular module 1521 performs at least part of a function provided by the processor 1510. According to an embodiment of the present invention, the cellular module 1521 further includes a communication processor (CP). Each of the WiFi module 1523, the BT module 1525, the GPS module 1527, and the NFC module 1528 includes a processor for processing data transmitted/received through a corresponding module, and at least one of these modules may be included in one integrated chip (IC) or IC package.

The RF module 1529 transmits/receives communication signals such as radio frequency (RF) signals. The RF module 1529 includes a transceiver, a power amp module (PAM), a frequency filter, a low noise amplifier (LNA), or an antenna. According to another embodiment of the present invention, at least one of the cellular module 1521, the WiFi module 1523, the Bluetooth® module 1525, the GPS module 1527, and the NFC module 1528 transmits/receives RF signals through a separate RF module.

The SIM 1524 includes a card including a SIM and/or an embedded SIM, and further includes unique identification information such as an integrated circuit card identifier (ICCID) or an international mobile subscriber identity (IMSI).

The memory 1530 includes an internal memory 1532 and an external memory 1534. The internal memory 1532 includes at least one of a volatile memory such as dynamic random access memory (DRAM), static RAM (SRAM), synchronous dynamic RAM (SDRAM), and a nonvolatile memory such as one- time programmable read-only memory (OTPROM), programmable ROM (PROM), erasable and programmable ROM (EPROM), electrically erasable and programmable ROM (EEPROM), mask ROM, flash ROM, flash memory such as a NAND flash memory or NOR flash memory, hard drive, or solid state drive (SSD).

The external memory 1534 further includes a flash drive, such as compact flash (CF), secure digital (SD), micro Micro-SD, Mini-SD, extreme digital (xD), (MultiMediaCard (MMC), or a memory stick. The external memory 1534 may be functionally and/or physically connected to the electronic device 1500 through various interfaces.

The sensor module 1540 measures physical quantities or detects an operating state of the electronic device 1500, thereby converting the measured or detected information into electrical signals. The sensor module 1540 includes at least one of a gesture sensor 1540A, a gyro sensor 1540B, a barometric pressure sensor 1540C, a magnetic sensor 1540D, an acceleration sensor 1540E, a grip sensor 1540F, a proximity sensor 1540G, a color sensor 1540H such as a red, green, blue (RGB) sensor, a biometric sensor 1540I, a temperature/humidity sensor 1540J, an illumination sensor 1540K, and an ultra violet (UV) sensor 1540M. Additionally or alternatively, the sensor module 1540 may include an E-nose sensor, an electromyography (EMG) sensor, an electroencephalogram (EEG) sensor, an electrocardiogram (ECG) sensor, an infra red (IR) sensor, an iris sensor, or a fingerprint sensor. The sensor module 1540 further includes a control circuit for controlling at least one sensor therein. According to an embodiment of the present invention, the electronic device 1500 further includes a processor configured to control the sensor module 1540 as part of or separately from the processor 1510 and thus controls the sensor module 1540 while the processor 1510 is in a sleep mode.

The input device 1550 includes a touch panel 1552, a digital pen sensor 1554, a key 1556, and an ultrasonic input device 1558. The touch panel 1552 uses at least one of capacitive, resistive, infrared, or ultrasonic methods, for example. Additionally, the touch panel 1552 further includes a control circuit, and a tactile layer that provides a tactile response to a user.

The digital pen sensor 1554 includes a sheet for recognition as part of a touch panel or a separate sheet for recognition. The key 1556 includes a physical button, an optical key, or a keypad, for example. The ultrasonic input device 1558 detects ultrasonic waves generated from an input tool through a microphone 1588 in order to check data corresponding to the detected ultrasonic waves.

The display module 1560 includes a panel 1562, a hologram device 1564, and a projector 1566. The panel 1562 has the same or similar configuration to the display of FIG. 1 or FIG. 2. The panel 1562 may be implemented to be flexible, transparent, or wearable, for example. The panel 1562 and the touch panel 1552 may be configured as one module. The hologram 1564 shows three-dimensional images in the air by using light interference. The projector 1566 displays an image by projecting light on a screen, which is placed inside or outside the electronic device 1500. According to an embodiment of the present invention, the display 1560 further includes a control circuit for controlling the panel 1562, the hologram device 1564, or the projector 1566.

The interface 1570 includes a high-definition multimedia interface (HDMI) 1572, a universal serial bus (USB) 1574, an optical interface 1576, and a D-subminiature (sub) 1578. The interface 1570 may be included in the communication interfaces 170, 270, and 370 shown in FIGS. 1, 2, and 3. Additionally or alternately, the interface 1570 may include a mobile high-definition link (MHL) interface, a secure Digital (SD) card/multi-media card (MMC) interface, or an infrared data association (IrDA) standard interface.

The audio module 1580 converts sound into electrical signals and converts the electrical signals into sounds. At least some components of the audio module 1580, for example, may be included in the input/output interfaces shown in FIGS. 1, 2, and 3. The audio module 1580 processes sound information inputted/outputted through a speaker 1582, a receiver 1584, an earphone 1586, or the microphone 1588.

The camera module 1591 captures still images and video, and includes at least one image sensor, a lens, an image signal processor (ISP), or a flash such as a light-emitting diode (LED) or a xenon lamp.

The power management module 1595 manages the power of the electronic device 1500. According to an embodiment of the present invention, the power management module 1595 includes a power management IC (PMIC), a charger IC, or a battery gauge, for example. The PMIC uses a wired and/or wireless charging method. The wireless charging method includes a magnetic resonance method, a magnetic induction method, or an electromagnetic method. An additional circuit for wireless charging, such as a coil loop, a resonant circuit, or a rectifier circuit, may be added. The battery gauge measures the remaining amount of the battery 1596, or a voltage, current, or temperature thereof during charging. The battery 1596 includes a rechargeable battery and/or a solar battery.

The indicator 1597 displays a specific state of the electronic device 1500 or a part thereof, such as a booting, message, or charging state. The motor 1598 converts electrical signals into mechanical vibration and generates vibration or a haptic effect. Although not shown in the drawings, the electronic device 1500 may include a processing device for mobile TV support, which processes media data according to standards such as digital multimedia broadcasting (DMB), digital video broadcasting (DVB), or mediaFLoTM.

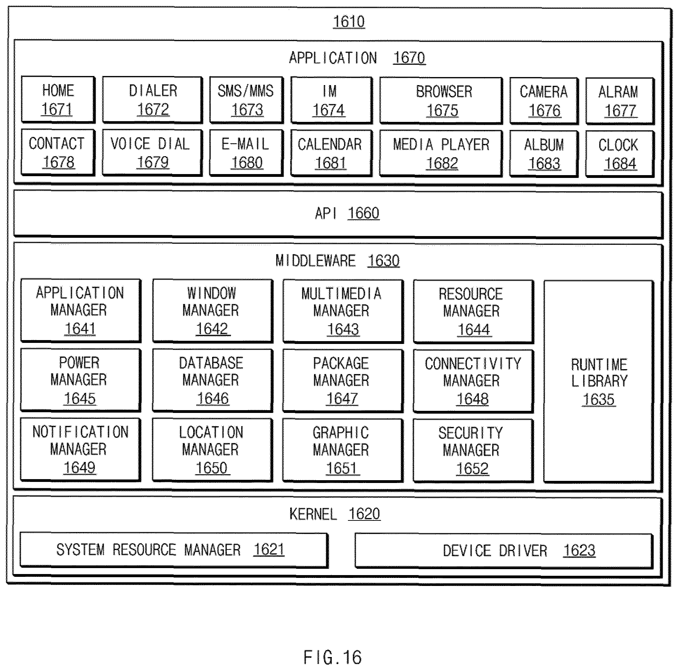

FIG. 16 is a block diagram illustrating a program module according to various embodiments of the present invention.

Referring to FIG. 16, the program module 1610 includes an OS for controlling a resource relating to an electronic device and/or various applications running on the OS. The OS, for example, includes Android, iOS, Windows, Symbian, Tizen, or Bada.

The program module 1610 includes a kernel 1620, a middleware 1630, an API 1660, and/or an application 1670. At least part of the program module 1610 may be preloaded on an electronic device or may be downloaded from a server.

The kernel 1620 includes a system resource manager 1621, and a device driver 1623. The system resource manager 1621 performs the control, allocation, or retrieval of a system resource, and includes a process management unit, a memory management unit, or a file system management unit. The device driver 1623 includes, for example, a display driver, a camera driver, a Bluetooth® driver, a sharing memory driver, a USB driver, a keypad driver, a WiFi driver, an audio driver, or an inter-process communication (IPC) driver.

The middleware 1630 provides a function that the application 1670 commonly requires, or provides various functions to the application 1670 through the API 1660 in order to allow the application 1670 to efficiently use limited system resources inside the electronic device. According to an embodiment of the present invention, the middleware 1630 includes at least one of a runtime library 1635, an application manager 1641, a window manager 1642, a multimedia manager 1643, a resource manager 1644, a power manager 1645, a database manager 1646, a package manager 1647, a connectivity manager 1648, a notification manager 1649, a location manager 1650, a graphic manager 1651, and a security manager 1652.

The runtime library 1635 includes a library module that a complier uses to add a new function through a programming language while the application 1670 is running. The runtime library 1635 performs a function on input/output management, memory management, or mathematics.

The application manager 1641 manages the life cycle of at least one application among the applications 1670. The window manager 1642 manages a GUI resource used in a screen. The multimedia manager 1643 recognizes a format for playing various media files and encodes or decodes a media file by using the codec corresponding to a corresponding format. The resource manager 1644 manages a resource such as a source code, a memory, or a storage space of at least any one of the applications 1670.

The power manager 1645 operate together with a basic input/output system (BIOS) to manage the battery or power and provides power information necessary for an operation of the electronic device. The database manager 1646 creates, searches, or modifies a database used in at least one of the applications 1670. The package manager 1647 manages the installation or update of an application distributed in a package file format.

The connectivity manger 1648 manages a wireless connection such as WiFi or Bluetooth®. The notification manager 1649 displays or notifies an event such as arrival messages, appointments, and proximity alerts to a user in a manner that does not interrupt the user. The location manager 1650 manages location information on an electronic device. The graphic manager 1651 manages a graphic effect to be provided to a user or a user interface relating thereto. The security manager 1652 provides various security functions necessary for system security or user authentication. According to an embodiment, when an electronic device includes a phone function, the middleware 1630 further includes a telephony manager for managing a voice or video call function of the electronic device.

The middleware 1630 includes a middleware module for forming a combination of various functions of the above-mentioned components. The middleware 1630 provides a module specialized for each type of OS to provide differentiated functions. Additionally, the middleware 1630 may delete part of existing components or dynamically add new components.

The API 1660, as a set of API programming functions, may be provided as another configuration according to the OS. For example, in the case of Android or iOS, one API set may be provided for each platform, and in the case of Tizen, at least two API sets may be provided for each platform.

The application 1330 includes at least one application for providing functions such as a home 1671, a dialer 1672, an SMS/MMS 1673, an instant message 1674, a browser 1675, a camera 1676, an alarm 1677, a contact 1678, a voice dial 1679, an e-mail 1680, a calendar 1681, a media player 1682, an album 1683, a clock 1684, health care such as measuring an exercise amount or blood sugar, or an environmental information provision such as air pressure, humidity, or temperature information.

According to an embodiment, the application 1670 includes an application (hereinafter "information exchange application") for supporting information exchange between the electronic device and an external electronic device. The information exchange application, for example, may include a notification relay application for relaying specific information to the external device or a device management application for managing the external electronic device.

For example, the notification relay application has a function for relaying, to an external electronic device, notification information occurring from another application of the electronic device. Additionally, the notification relay application receives notification information from an external electronic device and then provides the received notification information to a user.

The device management application manages at least one function of the external electronic device or the brightness adjustment of a display of an external electronic device communicating with the electronic device, an application operating in the external electronic device, or a service provided from the external device.

The application 1670 includes a specified application such as a health care application of a mobile medical device, according to the property of an external electronic device. According to an embodiment, the application 1670 includes an application received from an external electronic device. According to an embodiment, the application 1670 includes a preloaded application or a third party application downloadable from a server. The names of components in the program module 1610 may vary depending on the type of the OS.

According to various embodiments of the present invention, at least part of the program module 1610 may be implemented with software, firmware, hardware, or a combination thereof. At least part of the programming module 1610, for example, may be implemented by a processor. At least part of the programming module 1610 may include a module, a program, a routine, sets of instructions, or a process to perform at least one function, for example.

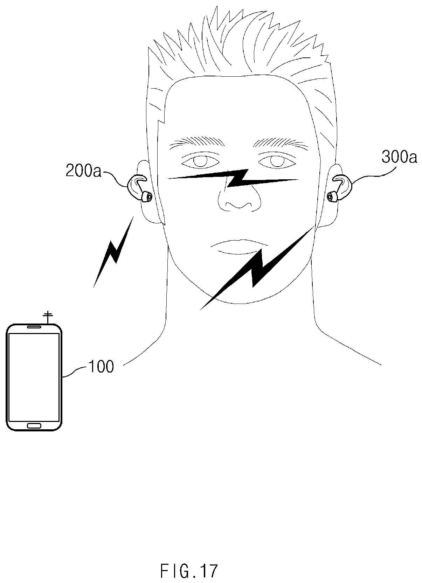

FIG. 17 illustrates a multi-connection management according to various embodiments of the present invention.

Referring to FIG. 17, a user manages a first electronic device 100, a second electronic device 200a, and a third electronic device 300a. The second electronic device 200a and the third electronic device 300a, for example, may be hearing aid devices. According to an embodiment of the present invention, the second electronic device 200a and the third electronic device 300a have a first connection such as a BLE based communication channel and a first frequency band (2.4GHz) or NFMI based communication channel, according to a first communication method. According to various embodiments of the present invention, the second electronic device 200a or the third electronic device 300a enters a paring mode corresponding to a specified setting or a user input. Accordingly, the second electronic device 200a or the third electronic device 300a includes a first communication module for supporting a Bluetooth® communication channel and a second communication module for supporting NFMI. The first electronic device searches for the second electronic device 200a entering a pairing mode by activating a Bluetooth® communication module and establishes a communication channel.

When establishing a communication channel with the first electronic device 100, the second electronic device 200a transmits Bluetooth® device address information of the first electronic device 100 to the third electronic device 300a. During this operation, the second electronic device 200a transmits device information as additional connection information to the third electronic device 300a based on a first connection. The third electronic device 300a establishes a communication channel with the first electronic device 100 based on a communication history.

In relation to the foregoing operation execution, according to various embodiments of the present invention, when an input event relating to Bluetooth® communication module activation occurs, the second electronic device 200a searches for a peripheral electronic device having a communication connection history included in a second connection list before entering a pairing mode. If the first electronic device 100 has a communication connection history, the second electronic device 200a may be connected to the first electronic device 100 without entering a pairing mode.

According to various embodiments of the present invention, if the third electronic device 300a has no communication connection history with the first electronic device 100, after entering a pairing mode, the third electronic device 300a establishes a Bluetooth® communication channel. During this operation, the third electronic device 300a maintains an NFMI based first connection with the second electronic device 200a. The third electronic device 300a enters a pairing mode corresponding to a pairing mode entry request of the second electronic device 200a. The first electronic device 100 searches for the third electronic device 300a by performing surrounding search corresponding to a connection request of the second electronic device 200a and establishes a Bluetooth® communication channel with the third electronic device 300a.

As mentioned above, according to various embodiments of the present invention, in a multi-connection state, the first electronic device 100 establishes a multi connection between the second electronic device 200a and the third electronic device 300a based on a Bluetooth® communication connection. The second electronic device 200a or the third electronic device 300a performs a Bluetooth® communication connection with the first electronic device, but may perform an NFMI based communication connection with the third electronic device 300a or the second electronic device 200a.

According to various embodiments of the present invention, after the first electronic device 100 and the second electronic device 200a perform a Bluetooth® communication connection, the third electronic device 300a performs an NFMI based communication connection with the second electronic device 200a. In this case, the second electronic device 200a transmits Bluetooth® device address information of the first electronic device 100, as additional connection information, to the third electronic device 300a through an NFMI based communication channel. According to whether there is a communication connection history between the third electronic device 300a and the first electronic device 100, the third electronic device 300a directly connects to the first electronic device 100 or after entering a paring mode, establishes a Bluetooth® communication channel corresponding to a connection request of the first electronic device 100. According to various embodiments of the present invention, when the second electronic device 200a and the third electronic device 300a establish a Bluetooth® communication multi-connection based on the first electronic device 100, an NFMI based communication channel between the second electronic device 200a and the third electronic device 300a may be maintained or released according to a setting.

Although it is described above that an NFMI based communication channel is established between the second electronic device 200a and the third electronic device 300a, various embodiments of the present invention are not limited thereto. For example, an electronic device for supporting a function of a hearing aid device, an earphone device, a headset device, and a circle device may mutually establish a communication channel of at least one of a Bluetooth® communication channel, a BLE based communication channel, and an E2E type communication channel.

Additionally, although it is described above that the second electronic device 200a and the third electronic device 300a establish a Bluetooth® communication channel with the first electronic device 100, various embodiments of the present invention are not limited thereto. For example, an electronic device for supporting a function of a hearing aid device, an earphone device, a headset device, and a circle device processes information transmission/reception with the first electronic device 100 based on various short-range communication channels. The short-range communication channel may be established based on at least one of a Bluetooth® communication module, a BLE communication module, an E2E communication module, and an NFMI communication module.

According to the above various embodiments of the present invention, a multi-connection with other electronic devices relating to an electronic device may be supported based on a simple user manipulation or automatically.

Additionally, according to various embodiments of the present invention, a multi-connection is established automatically corresponding to a specified function performance request of an electronic device or based on a simple user manipulation and based on this, a corresponding function performance is processed.

Each of the above-mentioned components of the electronic device according to various embodiments of the present invention may be configured with at least one component and the name of a corresponding component may vary according to the type of an electronic device. According to various embodiments of the present invention, an electronic device according to various embodiments of the present invention may include at least one of the above-mentioned components, may not include some of the above-mentioned components, or may further include another component. Additionally, some of components in an electronic device according to various embodiments of the present invention are configured as one entity, so that functions of previous corresponding components are performed identically.

The term "module" used in various embodiments of the present invention, for example, may indicate a unit including a combination of at least one of hardware, software, and firmware. The term "module" and the term "unit", "logic", "logical block", "component", or "circuit" may be interchangeably used. A "module" may be a minimum unit or part of an integrally configured component. A "module" may be a minimum unit performing at least one function or part thereof. A "module" may be implemented mechanically or electronically. For example, "module" according to various embodiments of the present invention may include at least one of an application-specific integrated circuit (ASIC) chip performing certain operations, field-programmable gate arrays (FPGAs), or a programmable-logic device, all of which are known or to be developed in the future.

According to various embodiments of the present invention, at least part of a device or a method according to this disclosure, for example, as in a form of a programming module, may be implemented using an instruction stored in computer-readable storage media. When at least one processor executes an instruction, it may perform a function corresponding to the instruction. The non-transitory computer-readable storage media may be the first memory 130, the second memory 230, or third memory 330, for example.

The non-transitory computer-readable storage media may include hard disks, floppy disks, magnetic media such as magnetic tape, optical media such as CD-ROM, and DVD, magnetooptical media such as floptical disk, and hardware devices such as ROM, RAM, or flash memory. Additionally, a program instruction may include high-level language code executable by a computer using an interpreter in addition to machine code created by a complier. The hardware device may be configured to operate as at least one software module to perform an operation of various embodiments of the present invention and vice versa.

A module or a programming module according to various embodiments of the present invention may include at least one of the above-mentioned components, may not include some of the above-mentioned components, or may further include another component. Operations performed by a module, a programming module, or other components according to various embodiments of the present invention may be executed through a sequential, parallel, repetitive or heuristic method. Additionally, some operations may be executed in a different order or may be omitted. Or, other operations may be added.

As mentioned above, according to various embodiments of the present invention, a multi-connection support method may include forming, by an electronic device, a communication channel with a specified electronic device through a communication interface and transmitting, by the electronic device, additional connection information of at least one connected another electronic device to the specified electronic device in order to allow the at least one connected another electronic device to be connected to the specified electronic device.

Moreover, the embodiments disclosed in this specification are suggested for the description and understanding of technical content but do not limit the range of the present invention. Accordingly, the range of the present invention should be interpreted as including all modifications or various other embodiments based on the technical idea of the present invention.

While the present invention has been shown and described with reference to certain embodiments thereof, it will be understood by those skilled in the art that various changes in form and details may be made therein without departing from the scope of the present invention. Therefore, the scope of the present invention should not be defined as being limited to the embodiments, but should be defined by the appended claims.

## Claims

1. A multi-connection support method, wherein the connections are based on at least one of a Bluetooth® communication connection, a Bluetooth® low energy, "BLE", based communication connection, the method comprising:
establishing, by a first electronic device (100) in a connection state (201) with at least one second electronic device (200), a communication channel (203) with a third electronic device (300) through a communication interface, wherein the first electronic device comprises a first memory (130) that stores a first connection list (131) comprising a connection history of the first electronic device (100), the second electronic device comprises a second memory (230) that stores a second connection list (231) comprising a second connection history of the at least one second electronic device (200), the third electronic device comprises a third memory (330) that stores a third connection list (331) comprising a third connection history of the third electronic device (300), wherein the second electronic device (200) delivers the second connection list (231) to the first electronic device (100) when the first electronic device (100) is connected or corresponding to a request of the connected first electronic device (100);
transmitting, by the first electronic device (100), to the third electronic device (300), additional connection information comprising a Bluetooth® device address of the at least one second electronic device for allowing at least one connected second electronic device to connect to the third electronic device (300);
determining, by the third electronic device (300), whether a communication connection history between the third electronic device (300) and the at least one second electronic device (200) is in the third connection list (331)
wherein:
when it is determined that the at least one second electronic device and the third electronic device (300) have a communication connection history, automatically connecting (207), by the third electronic device (300), with the at least one second electronic device (200) based on the additional connection information; and
when it is determined that the at least one second electronic device (200) and the third electronic device (300) have no communication connection history,
releasing, by the third electronic device (300), the connection with the first electronic device (100) for entering a pairing mode automatically, and
after performing an automatic pairing with the at least one second electronic device (200) by the third electronic device (300), adding, by the third electronic device (300), a connection to the first electronic device (100) automatically.

2. The method of claim1, further comprising outputting a screen interface relating to a single connection setting through which the third electronic device establishes a communication channel with the first electronic device or a multi-connection setting through which the third electronic device establishes a communication channel with a plurality of electronic devices.

3. A first electronic device (100) comprising:
a communication interface (170) configured to establish a communication channel with at least one second electronic device (200) and a third electronic device (300), wherein the third electronic device (300) comprises a third memory (330) having a third connection list (331) comprising a third connection history of the third electronic device (300) configured to store a communication connection history when the third electronic device (300) establishes a connection with the at least one second electronic device (200);
a processor (120) configured to control a communication connection establishment with the at least one second electronic device (200) through the communication interface (170), wherein the processor (120) is configured to obtain additional connection information comprising a Bluetooth® device address of the at least one second electronic device (200) through the communication channel with the at least one second electronic device (200); and
a memory (130) configured to store the additional connection information, wherein, when a third electronic device (300) is connected to the first electronic device (100) in a state of being connection between at least one second electronic device (200) and the first electronic device (100), the processor (120) is configured to transmit the additional connection information to establish connection with the at least one second electronic device (200) to the third electronic device (300),
wherein, when the third electronic device (300) has the communication connection history, the processor (120) is configured to deliver, via the communication interface (170), Bluetooth® device address information and identification information of the at least one second electronic device (200) to the third electronic device (300); and
wherein, when the third electronic device (300) has no the communication connection history, the processor (120) controls to:
release the connection with the third electronic device (300) and to enter the third electronic device in a pairing mode and
establish a connection with the third electronic device (300) automatically after performing the pairing mode of the third electronic device (300) and performing an automatic pairing between the at least one second electronic device (200) and the third electronic device (300),
wherein the connections are based on at least one of a Bluetooth® communication connection, a Bluetooth® low energy "BLE" based communication connection.

4. The first electronic device of claim 3, wherein the processor is configured to control to output a screen interface relating to a single connection setting through which the third electronic device establishes a communication channel with the first electronic device or a multi-connection setting through which the third electronic device establishes a communication channel with a plurality of electronic devices.

## Patentansprüche

1. Verfahren zur Unterstützung einer Mehrfachverbindung, wobei die Verbindungen auf einer Bluetooth®-Kommunikationsverbindung und/oder einer auf Bluetooth Low Energy (BLE) basierten Kommunikationsverbindung basieren, wobei das Verfahren Folgendes umfasst:
durch ein erstes elektronisches Gerät (100), das sich mit wenigstens einem zweiten elektronischen Gerät in einem Verbindungszustand (201) befindet, Herstellen eines Kommunikationskanals (203) mit einem dritten elektronischen Gerät (300) über eine Kommunikationsschnittstelle, wobei das erste elektronische Gerät einen ersten Speicher (130) umfasst, in dem eine erste Verbindungsliste (131) mit einem ersten Verbindungsverlauf des ersten elektronischen Geräts (100) gespeichert ist, wobei das zweite elektronische Gerät einen zweiten Speicher (230) umfasst, in dem eine zweite Verbindungsliste (231) mit einem zweiten Verbindungsverlauf des wenigstens einen zweiten elektronischen Geräts (200) gespeichert ist, und das dritte elektronische Gerät einen dritten Speicher (330) umfasst, in dem eine dritte Verbindungsliste (331) mit einem dritten Verbindungsverlauf des dritten elektronischen Geräts (300) gespeichert ist, wobei das zweite elektronische Gerät (200) die Verbindungsliste (231) an das erste elektronische Gerät (100) liefert, wenn das erste elektronische Gerät (100) verbunden ist oder entsprechend einer Anforderung des verbundenen ersten elektronischen Geräts (100);
durch das erste elektronische Gerät (100) Übertragen von zusätzlichen Verbindungsinformationen umfassend eine Bluetooth®-Geräteadresse des wenigstens einen zweiten elektronischen Geräts an das dritte elektronische Gerät (300), um eine Verbindung des wenigstens einen verbundenen zweiten elektronischen Geräts mit dem dritten elektronischen Gerät (300) zuzulassen;
durch das dritte elektronische Gerät (300) Bestimmen, ob ein Kommunikationsverbindungsverlauf zwischen dem dritten elektronischen Gerät (300) und dem wenigstens einen zweiten elektronischen Gerät (200) in der dritten Verbindungsliste (331) vorhanden ist,
wobei:
wenn bestimmt wird, dass das wenigstens eine zweite elektronische Gerät (200) und das dritte elektronische Gerät (300) einen Kommunikationsverbindungsverlauf aufweisen, basierend auf den zusätzlichen Verbindungsinformationen durch das dritte elektronische Gerät (300) automatisch eine Verbindung (207) mit dem wenigstens einen zweiten elektronischen Gerät (200) hergestellt wird; und
wenn bestimmt wird, dass das wenigstens eine zweite elektronische Gerät (200) und das dritte elektronische Gerät (300) keinen Kommunikationsverbindungsverlauf aufweisen,
durch das dritte elektronische Gerät (300) Freigeben der Verbindung mit dem ersten elektronischen Gerät (100) zum automatischen Eintreten in einen Pairing-Modus, und
nach der Durchführung eines automatischen Pairings durch das dritte elektronische Gerät mit dem wenigstens einen zweiten elektronischen Gerät (200), durch das dritte elektronische Gerät automatisches Hinzufügen einer Verbindung mit dem ersten elektronischen Gerät (100).

2. Verfahren nach Anspruch 1, das weiterhin Folgendes umfasst: Ausgeben einer Bildschirmschnittstelle im Zusammenhang mit einer einzelnen Verbindungseinstellung, durch die das dritte elektronische Gerät einen Kommunikationskanal mit dem ersten elektronischen Gerät herstellt, oder einer Mehrfachverbindungseinstellung, durch die das dritte elektronische Gerät einen Kommunikationskanal mit einer Vielzahl von elektronischen Geräten herstellt.

3. Erstes elektronisches Gerät (100), das Folgendes umfasst:
eine Kommunikationsschnittstelle (170), die dazu konfiguriert ist, einen Kommunikationskanal mit wenigstens einem zweiten elektronischen Gerät (200) und einem dritten elektronischen Gerät (300) herzustellen, wobei das dritte elektronische Gerät (300) einen dritten Speicher (330) umfasst, der eine dritte Verbindungsliste (331) aufweist, die einen dritten Verbindungsverlauf des dritten elektronischen Geräts (300) umfasst, wobei der Speicher dazu konfiguriert ist, einen Kommunikationsverbindungsverlauf zu speichern, wenn das dritte elektronische Gerät (300) eine Verbindung mit dem wenigstens einen zweiten elektronischen Gerät (200) herstellt;
einen Prozessor (120), der dazu konfiguriert ist, die Herstellung einer Kommunikationsverbindung mit dem wenigstens einen zweiten elektronischen Gerät (200) durch die Kommunikationsschnittstelle (170) zu steuern, wobei der Prozessor (120) dazu konfiguriert ist, zusätzliche Verbindungsinformationen einschließlich einer Bluetooth®-Geräteadresse des wenigstens einen zweiten elektronischen Geräts (200) durch den Kommunikationskanal mit dem wenigstens einen zweiten elektronischen Gerät (200) zu erhalten; und
einen Speicher (130), der dazu konfiguriert ist, die zusätzlichen Verbindungsinformationen zu speichern,
wobei, wenn ein drittes elektronisches Gerät (300) sich mit dem ersten elektronischen Gerät (100) verbindet, während eine Verbindung zwischen dem wenigstens einen zweiten elektronischen Gerät (200) und dem ersten elektronischen Gerät (100) besteht, der Prozessor (120) dazu konfiguriert ist, die zusätzlichen Verbindungsinformationen an das dritte elektronische Gerät (300) zu übertragen, um eine Kommunikationsverbindung mit dem wenigstens einen zweiten elektronischen Gerät (200) herzustellen,
wobei, wenn das dritte elektronische Gerät (300) den Kommunikationsverbindungsverlauf aufweist, der Prozessor (120) dazu konfiguriert ist, über die Kommunikationsschnittstelle (170) Bluetooth®-Geräteadresseninformationen und Identifizierungsinformationen des wenigstens einen zweiten elektronischen Geräts (200) an das dritte elektronische Gerät (300) zu liefern; und
wobei, wenn das dritte elektronische Gerät (300) keinen Kommunikationsverbindungsverlauf aufweist, der Prozessor (120) eine Steuerung durchführt zum
Freigeben der Verbindung mit dem dritten elektronischen Gerät (300) und Eintreten des dritten elektronischen Geräts in einen Pairing-Modus, und
Herstellen einer automatischen Verbindung mit dem dritten elektronischen Gerät (300) nach der Durchführung des Pairing-Modus des dritten elektronischen Geräts (300) und der Durchführung eines automatischen Pairings zwischen dem wenigstens einen zweiten elektronischen Gerät (200) und dem dritten elektronischen Gerät (300),
wobei die Verbindungen auf einer Bluetooth®-Kommunikationsverbindung und/oder einer auf Bluetooth Low Energy (BLE) basierten Kommunikationsverbindung basieren.

4. Erstes elektronisches Gerät nach Anspruch 3, wobei der Prozessor dazu konfiguriert ist, Folgendes zu steuern: Ausgeben einer Bildschirmschnittstelle im Zusammenhang mit einer einzelnen Verbindungseinstellung, durch die das dritte elektronische Gerät einen Kommunikationskanal mit dem ersten elektronischen Gerät herstellt, oder einer Mehrfachverbindungseinstellung, durch die das dritte elektronische Gerät einen Kommunikationskanal mit einer Vielzahl von elektronischen Geräten herstellt.

## Revendications

1. Procédé de prise en charge de multiples connexions, dans lequel les connexions reposent sur une connexion de communication par Bluetooth® et/ou une connexion de communication par Bluetooth® basse consommation (BLE, Bluetooth® low energy), le procédé comprenant:
l'établissement, par un premier appareil électronique (100) dans un état de connexion (201) avec au moins un deuxième appareil électronique (200), d'un canal de communication (203) avec un troisième appareil électronique (300) par le biais d'une interface de communication, ledit premier appareil électronique comprenant une première mémoire (130) dans laquelle est enregistrée une première liste de connexions (131) comprenant un historique des connexions du premier appareil électronique (100), ledit deuxième appareil électronique comprenant une deuxième mémoire (230) dans laquelle est enregistrée une deuxième liste de connexions (231) comprenant un deuxième historique des connexions de l'au moins un deuxième appareil électronique (200), ledit troisième appareil électronique comprenant une troisième mémoire (330) dans laquelle est enregistrée une troisième liste de connexions (331) comprenant un troisième historique des connexions du troisième appareil électronique (300), ledit deuxième appareil électronique (200) remettant la deuxième liste de connexions (231) au premier appareil électronique (100) lorsque le premier appareil électronique (100) est connecté ou en fonction d'une demande de la part du premier appareil électronique (100) connecté;
la transmission, par le premier appareil électronique (100), au troisième appareil électronique (300), d'informations de connexion supplémentaires, dont l'adresse Bluetooth® de l'au moins un deuxième appareil électronique, pour permettre à au moins un deuxième appareil électronique connecté de se connecter au troisième appareil électronique (300);
la détermination, par le troisième appareil électronique (300), du fait ou non qu'un historique de connexions de communication entre le troisième appareil électronique (300) et l'au moins un deuxième appareil électronique (200) est présent dans la troisième liste de connexions (331);
et comprenant en outre:
lorsqu'il a été déterminé que l'au moins un deuxième appareil électronique et le troisième appareil électronique (300) possèdent un historique de connexions de communication, une connexion automatique (207), effectuée par le troisième appareil électronique (300), avec l'au moins un deuxième appareil électronique (200) compte tenu des informations de connexion supplémentaires; et
lorsqu'il a été déterminé que l'au moins un deuxième appareil électronique (200) et le troisième appareil électronique (300) ne possèdent pas d'historique de connexions de communication,
l'abandon, par le troisième appareil électronique (300), de la connexion au premier appareil électronique (100) pour permettre une entrée automatique dans un mode d'appairage, et
après la mise en œuvre d'un appairage automatique avec l'au moins un deuxième appareil électronique (200) par le troisième appareil électronique (300), l'ajout automatique, par le troisième appareil électronique (300), d'une connexion au premier appareil électronique (100).

2. Procédé selon la revendication 1, comprenant en outre l'émission d'une interface visuelle ayant trait à un paramètre de connexion unique grâce auquel le troisième appareil électronique établit un canal de communication avec le premier appareil électronique ou à un paramètre de connexions multiples grâce auquel le troisième appareil électronique établit un canal de communication avec une pluralité d'appareils électroniques.

3. Premier appareil électronique (100) comprenant:
une interface de communication (170) conçue pour établir un canal de communication avec au moins un deuxième appareil électronique (200) et un troisième appareil électronique (300), ledit troisième appareil électronique (300) comprenant une troisième mémoire (330), présentant une troisième liste de connexions (331) comprenant un troisième historique des connexions du troisième appareil électronique (300), et conçue pour l'enregistrement d'un historique de connexions de communication lorsque le troisième appareil électronique (300) établit un connexion avec l'au moins un deuxième appareil électronique (200);
un processeur (120) conçu pour commander l'établissement d'une connexion de communication avec l'au moins un deuxième appareil électronique (200) par le biais de l'interface de communication (170), ledit processeur (120) étant conçu pour obtenir des informations de connexion supplémentaires, dont l'adresse Bluetooth® de l'au moins un deuxième appareil électronique (200), par le biais du canal de communication avec l'au moins un deuxième appareil électronique (200); et
une mémoire (130) conçue pour l'enregistrement des informations de connexion supplémentaires;
étant entendu que, lorsqu'un troisième appareil électronique (300) se connecte au premier appareil électronique (100) s'il y a une connexion entre au moins un deuxième appareil électronique (200) et le premier appareil électronique (100), le processeur (120) est conçu pour transmettre au troisième appareil électronique (300) les informations de connexion supplémentaires permettant l'établissement d'une connexion avec l'au moins un deuxième appareil électronique (200),
lorsque le troisième appareil électronique (300) possède l'historique de connexions de communication, le processeur (120) est conçu pour remettre au troisième appareil électronique (300), par le biais de l'interface de communication (170), des informations d'adresse Bluetooth® et des informations d'identification de l'au moins un deuxième appareil électronique (200), et lorsque le troisième appareil électronique (300) ne possède pas d'historique de connexions de communication, le processeur (120) effectue une commande pour:
abandonner la connexion avec le troisième appareil électronique (300) et pour faire entrer le troisième appareil électronique dans un mode d'appairage, et
établir automatiquement une connexion avec le troisième appareil électronique (300) après la mise en œuvre du mode d'appairage du troisième appareil électronique (300) et la mise en œuvre d'un appairage automatique entre l'au moins un deuxième appareil électronique (200) et le troisième appareil électronique (300),
lesdites connexions reposant sur une connexion de communication par Bluetooth® et/ou une connexion de communication par Bluetooth® basse consommation (BLE, Bluetooth® low energy).

4. Premier appareil électronique selon la revendication 3, dans lequel le processeur est conçu pour commander l'émission d'une interface visuelle ayant trait à un paramètre de connexion unique grâce auquel le troisième appareil électronique établit un canal de communication avec le premier appareil électronique ou à un paramètre de connexions multiples grâce auquel le troisième appareil électronique établit un canal de communication avec une pluralité d'appareils électroniques.
